Europäisches Patentamt

European Patent Office

Office européen des brevets

(19)

(11) **EP 0 565 470 B1**

(12)

# FASCICULE DE BREVET EUROPEEN

(45) Date de publication et mention
de la délivrance du brevet:
**09.09.1998 Bulletin 1998/37**

(51) Int Cl.⁶: **H04L 5/26**, H04J 11/00,
H04H 1/00, H04Q 7/10

(21) Numéro de dépôt: **93460017.2**

(22) Date de dépôt: **07.04.1993**

(54) **Procédé de transmission de données numériques de radiomessagerie**

Verfahren zur digitalen Funknachrichtenübertragung

Method for transmission of digital radio-paging messages

(84) Etats contractants désignés:
**DE GB**

(30) Priorité: **08.04.1992 FR 9204479**

(43) Date de publication de la demande:
**13.10.1993 Bulletin 1993/41**

(73) Titulaires:
- **FRANCE TELECOM**
  **75015 Paris (FR)**
- **TELEDIFFUSION DE FRANCE**
  **75932 Paris Cédex 15 (FR)**

(72) Inventeurs:
- **Rahuel, Jean-Claude**
  **F-35700 Rennes (FR)**
- **Pommier, Daniel**
  **F-35000 Rennes (FR)**

(74) Mandataire: **Vidon, Patrice**
  **Cabinet Patrice Vidon,**
  **Immeuble Germanium,**
  **80, Avenue des Buttes-de-Coesmes**
  **35700 Rennes (FR)**

(56) Documents cités:
**EP-A- 0 369 917**       **WO-A-86/03645**

## Description

Le domaine de l'invention est celui des systèmes de transmission de données numériques.

Plus précisément, l'invention concerne les systèmes de transmission permettant de faire parvenir, par voie hertzienne, un message spécifique à un récepteur donné, et uniquement à ce récepteur.

Elle s'applique notamment aux systèmes dans lesquels au moins certains récepteurs ont un fonctionnement intermittent (c'est-à-dire entrant en fonctionnement périodiquement, à des instants prédéterminés).

Un domaine d'application privilégié de l'invention est celui de la radiomessagerie unilatérale. Par radiomessagerie (en anglo-saxon : "paging"), on entend tout système permettant la transmission d'un message vers un récepteur portable, pouvant avantageusement tenir dans la poche d'un utilisateur. Ces systèmes permettent notamment de transmettre un message à une personne en déplacement, alors même que l'expéditeur du message ne sait pas où se trouve son correspondant.

De façon classique, de tels systèmes assurent, dans le cas le plus simple, l'émission d'un signal sonore et/ou visuel par un récepteur de poche, sur réception d'un message. Ces systèmes sont généralement connus sous la désignation de système d'appel de personne simple. L'abonné détenteur du récepteur, lorsqu'il reçoit un message, rappelle téléphoniquement un numéro prédéterminé (par exemple son secrétariat), ou interroge une messagerie vocale (par téléphone) ou informatique, par l'intermédiaire d'un terminal vidéotext, tel qu'un Minitel (marque déposée).

D'autres récepteurs, plus perfectionnés, permettent la réception et la visualisation d'un court message numérique, tel que, par exemple un numéro de téléphone à rappeler ou une information codée.

De tels récepteurs sont notamment utilisés dans les services de radiomessagerie connus sous les noms d'"Opérator" (marque déposée) et d'"Alphapage" (marque déposée) disponibles sur le territoire français.

Ces systèmes de radiomessagerie, de même que tous les autres systèmes de radiomessagerie actuellement connus, présentent de nombreux inconvénients.

Tout d'abord, ils ne permettent, au mieux, que la transmission d'un court message. En conséquence, il est pratiquement systématiquement nécessaire que l'abonné recevant un message recherche un téléphone pour connaître la teneur réelle de l'information qui lui est destinée. Cette démarche est lourde, et parfois difficile à mettre en oeuvre.

On conçoit par exemple qu'il est peu aisé de trouver un téléphone, et plus encore un Minitel (marque déposée) sur une autoroute. Dans ce cas, la prise de connaissance de l'information risque d'être fortement différée, ce qui peut être parfois préjudiciable.

Par ailleurs, pour des raisons évidentes d'autonomie de fonctionnement, les récepteurs portables ne pouvant être alimentés que par des piles ou des batteries, ces récepteurs doivent avoir un fonctionnement intermittent. Plus précisément, un récepteur de radiomessagerie est le plus souvent en veille (seule une horloge est alimentée), et entre en fonction cycliquement, pour détecter un éventuel message qui lui serait destiné.

Cela implique une gestion particulière des instants d'émission, de façon que chaque message soit émis uniquement lorsque le récepteur destinataire a quitté l'état de veille pour entrer en fonction.

En contrepartie, il convient que les récepteurs disposent de moyens de synchronisation spécifiques, de façon à contrôler les instants d'entrée en fonction. Pour ce faire, dans les systèmes connus, on insère parmi les données de radiomessagerie des données de synchronisation temporelle. Par exemple, dans le cas du système Opérator (marque déposée), des codes représentatifs des minutes et des dixièmes de minute sont émis. Un inconvénient majeur de cette technique est qu'il est nécessaire de décoder toutes les informations transmises jusqu'à détection d'un code de synchronisation, ce qui maintient le récepteur en fonction pendant une certaine période de temps consommatrice d'énergie électrique.

Le document de demande de brevet WO-8 603 645 présente également une technique de synchronisation d'un système de radiomessagerie basée sur une division du temps. Plus précisément, ce document propose de diviser le temps en intervalles (appelés "frames", "subframes" et "time slots"), de numéroter ces intervalles et d'affecter sélectivement ces numéros aux récepteurs.

A nouveau, les récepteurs sont obligés de connaître avec précision l'heure, afin de s'activer aux bons instants. Pour ce faire, le système assure l'émission dans chaque "sub-frame" (sous-trame) une information portant la date et l'heure. A chaque activation, le récepteur doit donc lire cette information, et recaler sont horloge en conséquence, si nécessaire. Ces opérations maintiennent également le récepteur en fonction pendant un certain délai, entrainant une consommation d'énergie élevée.

Par ailleurs, ce système de radiomessagerie, de même que de nombreux systèmes de radiomessagerie actuels, nécessite une infrastructure spécifique complète, et notamment des émetteurs particuliers. C'est également le cas du système Alphapage (marque déposée).

Dans ce cas, les coûts d'installation d'un service de radiomessagerie de ce type sont élevés, et se retrouvent répercutés d'une part sur le coût des récepteurs, et d'autre part sur le coût des communications.

De plus, la nécessité de ces installations spécifiques limite fortement la couverture géographique de ces systèmes de radiomessagerie, seules les zones les plus importantes (en terme de trafic) étant généralement couvertes.

Dans d'autres cas, les systèmes de radiomessagerie s'appuyent sur un réseau de diffusion en modulation de fréquence déjà existant. Les coûts d'infrastructure sont alors plus faibles, mais au prix d'une complexité accrue des récepteurs. En particulier, la couverture géographique d'un émetteur en modulation de fréquence étant limitée, il faut, pour que le service de radiomessagerie couvre un vaste territoire, que chaque récepteur comprenne des moyens de changement de fréquence de démodulation, et des moyens de sélection de la meilleure fréquence de démodulation à chaque instant (système RDS).

Par ailleurs, les systèmes de radiodiffusion connus rencontrent des difficultés de réception de signaux FM dans de nombreuses situations, particulièrement lorsqu'ils sont mobiles et/ou qu'ils sont utilisés en milieu urbain (effet Doppler, évanouissements, échos, multitrajets, brouillages, ...). Ils n'offrent donc pas une garantie suffisante de réception.

L'invention a notamment pour objectif de pallier ces différents inconvénients de l'état de la technique.

Plus précisément, un premier objectif de l'invention est de fournir un procédé de transmission de données numériques permettant d'assurer un service de radiomessagerie unilatéral offrant un débit élevé, et notamment un débit très supérieur à celui offert par les procédés de radiomessagerie connus.

Par conséquent, un objectif de l'invention est de fournir un tel procédé permettant d'assurer une synchronisation précise de récepteurs à fonctionnement intermittent, ainsi qu'une resynchronisation aisée et rapide en cas de perte de synchronisation.

Un autre objectif de l'invention est de fournir un tel procédé dans lequel la synchronisation est effectuée de façon simple, notamment pour des raisons de coût de revient des récepteurs, de poids et d'encombrement (les récepteurs doivent pouvoir tenir dans la poche) et surtout de temps de traitement.

En effet, un objectif important de l'invention est de limiter les traitements nécessairement effectués par les récepteurs à fonctionnement intermittent. Plus précisément, l'invention a pour objectif essentiel de fournir un tel procédé permettant de réduire au maximum la consommation électrique des récepteurs, de façon à, bien sûr, assurer la plus grande autonomie possible pour ces récepteurs.

Cet objectif se traduit notamment par les deux sous-objectifs suivants :

- réduire le temps de fonctionnement de chaque récepteur, ou plus précisément augmenter le rapport entre le temps de veille, pendant lequel la consommation électrique est très réduite, et le temps de fonctionnement ;
- limiter les traitements (analogiques et numériques) effectués pendant ce temps de fonctionnement.

L'invention a également pour objectif de fournir un tel procédé, qui permette d'assurer la diffusion de messages de radiomessagerie sur un vaste territoire géographique (par exemple l'ensemble du territoire français ou européen), sans nécessiter de changement de fréquences de démodulation, ni par conséquence de recherche de la meilleure fréquence de démodulation.

Un objectif particulier de l'invention est de fournir un procédé de transmission numérique mettant en oeuvre la technique dénommée COFDM (Coding Orthogonal Frequency Division Modulation (Multiplexage de Fréquences Orthogonales Codées)), dont les principes de base sont notamment décrits dans les brevets français FR-A-2601210 du 2 juillet 1986 et FR-A-2604316 du 23 septembre 1986, au nom des mêmes déposants.

Le document EP-A-369917 présente une structure de trames de symboles émis selon la technique COFDM. Chaque trame débute par deux symboles de synchronisation, suivis d'une série de symboles utiles, portant des données à transmettre.

Cette technique COFDM a notamment été retenue pour le système de radiodiffusion numérique européen DAB (Digital Audio Broadcasting, en anglo-saxon). Un objectif de l'invention est donc de fournir un procédé de radiomessagerie compatible avec les normes (en cours d'élaboration) définissant le DAB, et permettant d'assurer un service de radiomessagerie.

Plus généralement, l'invention a pour objectif de fournir un procédé qui permette simultanément la diffusion de messages de radiomessagerie et d'autres types de données, correspondant par exemple à des signaux audionumériques, à des signaux de télévision numérique, à des signaux de vidéotext, etc...

Un autre objectif de l'invention est encore de fournir un tel procédé de transmission numérique qui permette d'étendre les services de radiomessagerie, en autorisant par exemple la transmission de documents complets, d'images,... En d'autres termes, un des objectifs de l'invention est de fournir un procédé permettant de définir des récepteurs de radiomessagerie pouvant recevoir une information suffisamment complète pour ne pas nécessiter l'usage complémentaire d'un téléphone ou d'un terminal vidéotext, après réception d'un message.

L'invention a également pour objectif de fournir un tel procédé, permettant d'étendre les techniques de la radiomessagerie à de nombreuses autres applications telles que par exemple le téléchargement de données dans des micro-ordinateurs portables ou l'envoi d'informations vers des mobiles (par exemple, dans le cas de récepteurs embarqués dans des automobiles, où il est souhaitable que la consommation électrique soit limitée, au moins lorsque l'automobile est à l'arrêt), et plus généralement à toutes les applications où il est nécessaire de transmettre des données vers des appareils autonomes, du point de vue de leur alimentation électrique, et qui doivent préférentiellement de ce fait adopter un fonctionnement intermittent.

Un objectif complémentaire de l'invention est, bien sûr, de fournir des récepteurs de radiomessagerie compatibles avec un tel procédé, qui soient d'un faible coût de revient, et d'un encombrement et d'un poids limités.

L'invention a également pour objectif de fournir une gamme diversifiée de tels récepteurs de radiomessagerie, répondant à différentes applications ou à différents niveaux de service.

Ces objectifs, ainsi que d'autres qui apparaîtront par la suite, sont atteints selon l'invention à l'aide d'un procédé de transmission de données numériques incluant des informations de radiomessagerie, destiné notamment à transmettre des messages de radiomessagerie vers au moins un récepteur de radiomessagerie possédant un identifiant qui lui est propre,

procédé dans lequel lesdites données sont transmises selon une technique d'émission mettant en oeuvre une pluralité de fréquences porteuses orthogonales et comprenant les étapes de :

- génération d'une série d'éléments de données source représentative d'un signal à transmettre ;
- modulation simultanée de chacune desdites fréquences porteuses orthogonales par un desdits éléments de données source respectivement, de façon à former des symboles de données constitués de ladite pluralité de fréquences porteuses modulées ;
- transmission desdits symboles de données vers au moins un desdits récepteurs ;

ledit procédé comprenant les étapes de :

- regroupement desdits symboles de données en trames de symboles, chacune desdites trames comprenant un nombre prédéterminé de symboles ;
- division d'au moins certaines desdites trames en au moins deux canaux :

    - au moins un premier canal, dit canal d'information rapide, comprenant au moins un symbole de données, les fréquences porteuses desdits symboles étant modulées par des éléments de données non entrelacés en temps ;
    - au moins un second canal, dit canal principal, comprenant au moins un symbole de données, les fréquences porteuses desdits symboles étant modulées par des éléments de données préalablement entrelacés en temps ;

- insertion dans ledit canal d'information rapide d'au moins certaines desdites trames, dites trames numérotées, d'un numéro de trame appartenant à un jeu de numéros de trames prédéfinis, de telle façon que chacun desdits numéros de trame soit inséré dans une trame à des intervalles de temps fixes prédéterminés ;
- affectation à chacun desdits récepteurs de radiomessagerie d'au moins un desdits numéros de trame ;
- transmission d'un message de radiomessagerie vers un desdits récepteurs de radiomessagerie, ledit message comprenant d'une part l'identifiant dudit récepteur et d'autre part des informations utiles, au moins ledit identifiant étant transmis dans ledit canal d'information rapide d'une trame portant un numéro affecté audit récepteur.

Ainsi, selon l'invention, les données transmises sont organisées en trames, dont au moins certaines sont numérotées. Ces numéros sont utilisés pour faciliter la synchronisation des récepteurs de radiomessagerie. En effet, chaque récepteur connaît un ou plusieurs numéros de trame, qui correspondent à des trames susceptibles de transporter un message qui lui est destiné.

Il est à noter qu'il ne s'agit pas, contrairement aux techniques connues, d'une division du temps directe, mais d'une numérotation des trames physiques (une trame étant un ensemble de symboles, et non une durée). Le récepteur n'est pas synchronisé sur le temps réel mais sur les trames.

Ces numéros de trame permettent donc à un récepteur de vérifier qu'il passe de l'état de veille à l'état actif aux bons moments (c'est-à-dire lorsqu'une trame portant un numéro qui lui est affecté est transmise) et, lorsque ce n'est pas le cas, de déterminer, par comparaison de numéros de trame, les instants auxquels il doit passer à l'état actif.

L'invention permet une très grande souplesse dans la façon dont les trames de données sont construites, et dans la façon dont les données sont réparties dans ces trames. Ainsi, notamment :

- il n'est pas toujours nécessaire que toutes les trames soient numérotées. Dans un système optimisé, il suffit que seules les trames portant un début de message le soient ; toutefois on pourra aussi prévoir d'insérer systématiquement un numéro de trame dans toutes les trames, notamment pour pallier des problèmes de synchronisation, ou encore pour rendre immédiatement lisible le numéro de la trame courante par un récepteur qui vient de se réveiller ;
- l'intervalle de temps entre deux trames portant le même numéro doit impérativement être constant. En revanche, les intervalles de temps, ou temps de cycle, associés à deux numéros distincts peuvent être différents. Cela permet notamment de prévoir plusieurs niveaux de service, en terme de rapidité d'accès à un récepteur. Dans le cas d'un service de radiomessagerie classique, cet intervalle de temps fixe prédéterminé entre deux trames portant le même numéro de trame peut être par exemple compris entre 30 secondes et 5 minutes. Plus généralement, il sera choisi de façon à être compatible avec le service correspondant ;

- dans le même objectif de service à plusieurs niveaux de qualité, il est également tout à fait envisageable que plusieurs numéros de trame différents soient affectés à un même récepteur ;

- d'une manière générale, un récepteur donné peut aller chercher l'ensemble de l'information qui lui est adressée sur plusieurs trames dont il connaît a priori les numéros ;

- il n'est pas nécessaire que l'ensemble d'un message destiné à un récepteur soit émis dans une trame portant un numéro de trame affecté à ce récepteur. Il suffit que le début de ce message le soit. Le reste du message peut par exemple se trouver dans la trame suivante, ou en tout autre emplacement prévu par convention et/ou désigné dans le début du message ;

- au moins certaines trames peuvent transporter des données autres que des données de radiomessagerie.

Par ailleurs, il convient de noter que l'on entend ici par radiomessagerie non seulement les services classiques permettant de transmettre un message à une personne en déplacement (services dits parfois "d'appel de personnes"), mais également tous les services pouvant nécessiter la diffusion par voie hertzienne de messages destinés à des récepteurs particuliers (identifiés par un numéro, ou identifiant, unique) à fonctionnement intermittent, pour des raisons de consommation électrique.

Il peut par exemple s'agir de téléchargement de micro-ordinateur, de messagerie vers des autres mobiles, etc...

Par ailleurs, l'invention repose également sur la mise en oeuvre d'une technique de modulation à fréquences porteuses orthogonales du type de la technique COFDM. Dans ce cas, le service de radiomessagerie peut notamment être intégré à un procédé de radiodiffusion, tel que celui en cours de normalisation au niveau européen (projet EUREKA "DAB").

Selon l'invention, une trame comprend donc au moins deux canaux :

- le canal d'information rapide, dans lequel est contenu un ensemble d'informations générales, et notamment le numéro de trame. Il peut également comprendre, notamment lorsque les données de radiomessagerie ne sont pas toutes situées dans le canal d'information rapide, un indicateur de présence d'information de radiomessagerie dans ladite trame (placé de préférence dans le premier symbole du canal).

   Dans ce canal d'information rapide, les données ne sont pas entrelacées en temps. Ainsi le décodage est simplifié (au détriment d'une légère perte en ce qui concerne la protection contre les erreurs) : il n'est pas nécessaire de mémoriser un ensemble de symboles (et donc de rester en veille pendant ce temps là) pour effectuer le décodage. Les traitements et le temps sont limités, ce qui est essentiel pour les récepteurs autonomes.

   En particulier, même lorsque pour des raisons quelconques (par exemple des contraintes de normalisation) il n'est pas possible de placer les données de radiomessagerie en début de trame, il n'est pas nécessaire de décoder d'autres données utiles que l'indicateur de présence d'information lorsqu'aucune information de radiomessagerie n'est présente.

   Préférentiellement, ce canal peut de plus (par exemple dans le cas du système DAB) transporter des données descriptives de la structuration en canaux de la trame en cours et/ou des trames suivantes. ;

- le ou les canaux principaux, qui sont quant à eux entrelacés en temps, de façon à profiter pleinement des avantages du COFDM. Ces canaux peuvent comprendre des données de radiomessagerie complémentaires (adressées par un système de pointeurs contenus dans le canal d'information rapide), mais également de nombreux autres types de données, et par exemple des signaux de radiodiffusion, de télévision,...

Une trame est constituée de symboles successifs, un canal est par exemple constitué d'au moins un symbole de données.

Lorsque le canal d'information rapide porte un indicateur de présence d'informations de radiomessagerie dans ledit champ de données, et si cet indicateur précise qu'aucune information de radiomessagerie n'est présente dans la trame, le récepteur peut interrompre directement son activité, sans lire le champ de données. Il en résulte un gain en énergie électrique.

Dans le cas où une trame de données comprend au moins deux canaux de transport de données indépendants, il est avantageux que ledit canal dinformation rapide soit le premier canal de ladite trame.

A nouveau, cela permet de réduire le plus possible le temps de fonctionnement des récepteurs de radiomessagerie.

Avantageusement, chacune desdites trames débute par une série d'au moins un symbole de synchronisation temporelle et/ou fréquentielle. Il peut notamment comprendre un symbole de vobulation, fournissant une référence de phase pour la démodulation de chaque fréquence porteuse des symboles suivants de ladite trame.

Dans ce cas, préférentiellement, le symbole portant ledit numéro de trame est avantageusement placé immédiatement après le symbole de vobulation, et est modulé différentiellement par rapport auxdites références de phase fournies par ledit symbole de vobulation.

Avantageusement, lesdites informations de radiomessagerie sont codées à l'aide d'un code convolutif systématique.

Ainsi, l'information de radiomessagerie apparaît en clair, associée à des données de correction d'erreur. On peut alors envisager un fonctionnement adaptatif des récepteurs, en fonction de la qualité du canal de transmission. En effet, s'il y a peu de perturbations, il n'est pas nécessaire d'effectuer de décodage, ce qui entraîne des économies d'énergie.

Dans un mode de réalisation avantageux de l'invention, lesdites informations de radiomessagerie comprennent des pointeurs, renvoyant vers des données complémentaires contenues dans au moins un second canal de transport de données de la trame en cours et/ou dans au moins un canal de transport de données d'au moins une trame à venir.

Cette technique nouvelle permet notamment d'étendre les domaines d'application des récepteurs de radiomessagerie. En effet, jusqu'ici, seuls de très courts messages pouvaient être émis. C'est également le cas dans le canal de radiomessagerie de l'invention. En revanche, il est possible d'adjoindre à ce canal un ou plusieurs canaux complémentaires, pouvant par exemple porter une image, un document ou tout autre type de données. De plus, ces données peuvent être réparties sur plusieurs canaux et/ou plusieurs trames.

Ainsi, il est possible de définir des récepteurs de radiomessagerie "haut de gamme" permettant la réception et la visualisation d'images ou de documents. Ces récepteurs deviennent ainsi tout à fait autonomes. Il n'est plus nécessaire de rappeler un numéro de téléphone sur réception d'un message.

Par ailleurs, cela permet de prévoir d'autres applications du procédé de l'invention, telles que le téléchargement de micro-ordinateurs portables.

Lesdites données complémentaires contenues dans un second canal de transport de données sont entrelacées en temps et/ou en fréquence.

Ainsi, dans le cas d'une trame DAB, ce second canal profite des avantages de la technique COFDM (efficacité de la transmission même en présence de fortes perturbations). Au contraire, le canal d'information rapide ne subit pas d'entrelacement temporel, de façon à simplifier le décodage et donc la consommation électrique.

Comme déjà mentionné plus haut, chaque récepteur possède un identifiant qui lui est propre.

Avantageusement, une partie de l'identifiant qui est associé au récepteur correspond à un numéro de trame associé audit récepteur, et la partie complémentaire dudit identifiant désigne de façon unique ledit récepteur.

L'identifiant peut aussi être constitué pour partie de plusieurs numéros de trames, par exemple lorsque le récepteur est destiné à recevoir au moins toutes les trames correspondant à ces numéros.

Dans le cas où le procédé de l'invention est appliqué à un réseau de diffusion cellulaires comprenant au moins deux cellules de zones de diffusion géographique distinctes, il est avantageux que chacun desdits récepteurs de radiomessagerie soit associé sélectivement à au moins une desdites cellules, et qu'un message de radiomessagerie destiné à un récepteur de radiomessagerie donné ne soit transmis que dans la ou les cellules associées audit récepteur donné.

Un récepteur permettant de recevoir des messages de radiomessagerie transmis selon le procédé décrit ci-dessus comprend préférentiellement des moyens d'activation périodique dudit récepteur agissant de façon que ledit récepteur soit en activité à chaque instant correspondant à la transmission d'une trame numérotée dont le numéro de trame est affecté audit récepteur, des moyens d'extraction du numéro de trame de chaque trame reçue par ledit récepteur et des moyens de contrôle desdits moyens d'activation périodique, en fonction dudit numéro de trame extrait.

Avantageusement, ce récepteur comprend également des moyens de mémorisation d'au moins un symbole contenant des informations de radiomessagerie, de façon que la démodulation et/ou le traitement desdites informations de radiomessagerie soient effectués en temps différé, par lecture des symboles mémorisés.

Les récepteurs de radiomessagerie ne fonctionnant que de façon intermittente, on peut en effet réaliser tout ou partie du décodage en différé. Il s'agit ici d'une caractéristique nouvelle et particulièrement avantageuse de l'invention. Cela permet en effet d'utiliser des moyens de traitement moins coûteux que ceux nécessaires à un traitement en temps réel.

Dans le cas où les données sont transmises sous forme de symboles modulés différentiellement, il est avantageux que le symbole précédant le premier symbole contenant des informations de radiomessagerie soit également stocké dans lesdits moyens de mémorisation.

Ce symbole précédent peut par exemple être le symbole de vobulation.

De façon préférentielle, lesdites informations de radiomessagerie étant codées à l'aide d'un code convolutif systématique, le récepteur comprend des moyens d'activation sélective de moyens de décodage des données codées à l'aide dudit code convolutif, en fonction d'une information représentative des perturbations introduites par le canal de transmission.

Enfin, le procédé de transmission de l'invention permet de prévoir un procédé de synchronisation des récepteurs particulièrement efficace et peu gourmand en temps de traitement, comprenant une phase d'initialisation, comprenant les étapes de :

- activation, à un instant quelconque, dudit récepteur ;
- lecture du numéro de trame d'au moins une trame transmise audit instant quelconque ;
- calcul d'un écart de temps entre une trame portant le numéro de trame lu et une trame portant un numéro de trame affecté audit récepteur ;

et une phase d'activation périodique dudit récepteur aux instants correspondant à la transmission d'une trame portant un numéro de trame affecté audit récepteur.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :

- la figure 1 présente schématiquement un système complet de diffusion de radiomessagerie selon l'invention ;
- la figure 2 est un exemple de structuration d'une trame COFDM en canaux, suivant une technique connue en soi ;
- la figure 3 illustre le principe de la numérotation des trames et de l'association de numéros de trame à chaque récepteur de radiomessagerie, selon l'invention ;
- la figure 4 est un exemple détaillé d'une structure de trame selon le principe illustré en figure 3 ;
- la figure 5 est un schéma synoptique général d'un récepteur du système de la figure 1 ;
- la figure 6 illustre le fonctionnement dans le temps des différents éléments du récepteur de la figure 5 ;
- la figure 7 présente la structure détaillée d'un mode de réalisation avantageux de la partie analogique du récepteur de la figure 5 ;
- la figure 8 présente la structure détaillée d'un mode de réalisation avantageux de la partie numérique du récepteur de la figure 5 ;
- la figure 9 est un organigramme illustrant le fonctionnement des moyens de traitement spécifiques à la radiomessagerie des moyens de la figure 8 ;
- la figure 10 illustre l'architecture générale d'une trame COFDM selon l'invention ;
- la figure 11 présente une chaîne de transmission de signaux COFDM adapté à l'invention.

Le mode de réalisation préférentiel de l'invention décrit par la suite s'intègre dans un système de radiodiffusion numérique tel que, par exemple, le système de radiodiffusion DAB en cours de normalisation au niveau européen.

Il est clair toutefois que l'invention ne se limite pas à cette application, mais qu'elle peut au contraire être mise en oeuvre selon de très nombreuses autres méthodes. En particulier, il n'est aucunement obligatoire que l'invention partage des ressources avec d'autres données (radio, TV,...).Elle peut en effet s'appliquer à un système de radiomessagerie dédié, tel que le sont les systèmes actuels connus.

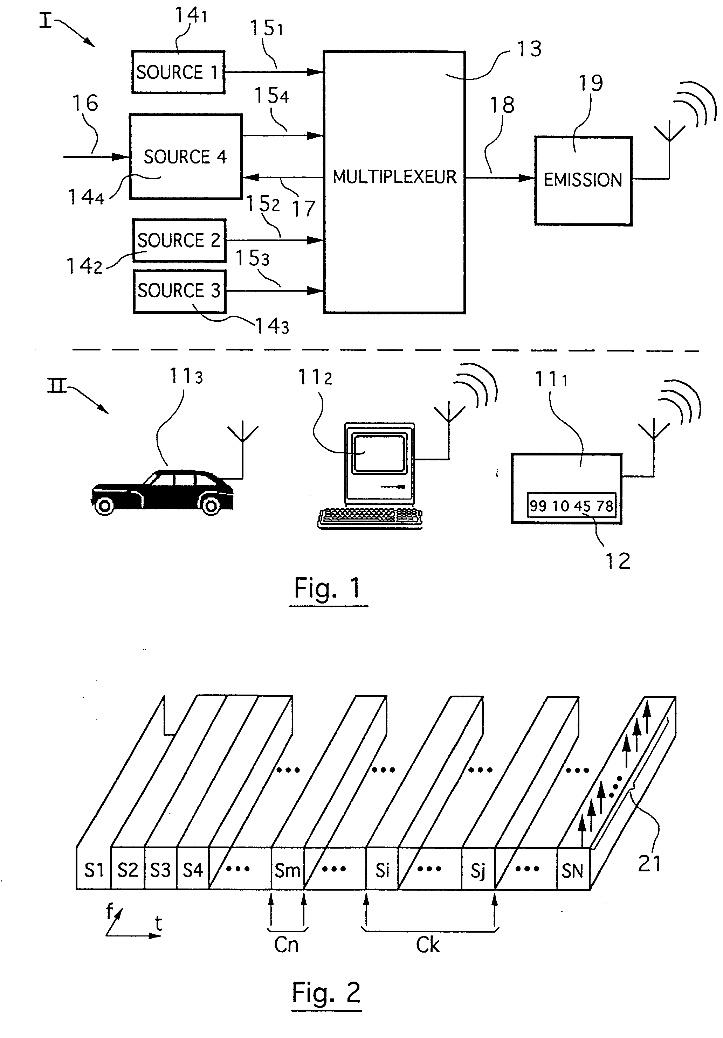

La figure 1 illustre un système complet de diffusion selon l'invention. Ce système comprend une partie d'émission I, et une partie de réception II.

La partie de réception II comprend une pluralité de récepteurs $11_1$ à $11_3$, qui peuvent être de types variés. Ainsi, à titre d'exemples, on a représenté (sans respect des échelles) :

- un récepteur de poche $11_1$, classique, permettant la réception et la visualisation d'un message 12 alphanumérique ou numérique, tel qu'un numéro de téléphone à rappeler.
  Des récepteurs de radiomessagerie plus simples, ne permettant que l'émission d'un signal visuel et/ou sonore sur réception d'un message sont également prévus. Par ailleurs, ainsi qu'on le verra par la suite, des récepteurs perfectionnés, permettant la visualisation d'images et/ou de documents sont aussi prévus ;
- un micro-ordinateur portable téléchargeable $11_2$, susceptible de recevoir des données diverses de radiomessagerie. Il est ainsi possible, par exemple, de transmettre tout type de document à une personne ou à un groupe de personnes en déplacement. Celle-ci peut alors les utiliser, modifier, imprimer, etc...
- une automobile $11_3$, équipée d'un récepteur de radiomessagerie restant en fonction même lorsque l'automobile est à l'arrêt.

L'invention s'applique préférentiellement dans le cas de récepteurs mobiles, mais n'exclut pas que le récepteur soit fixe.

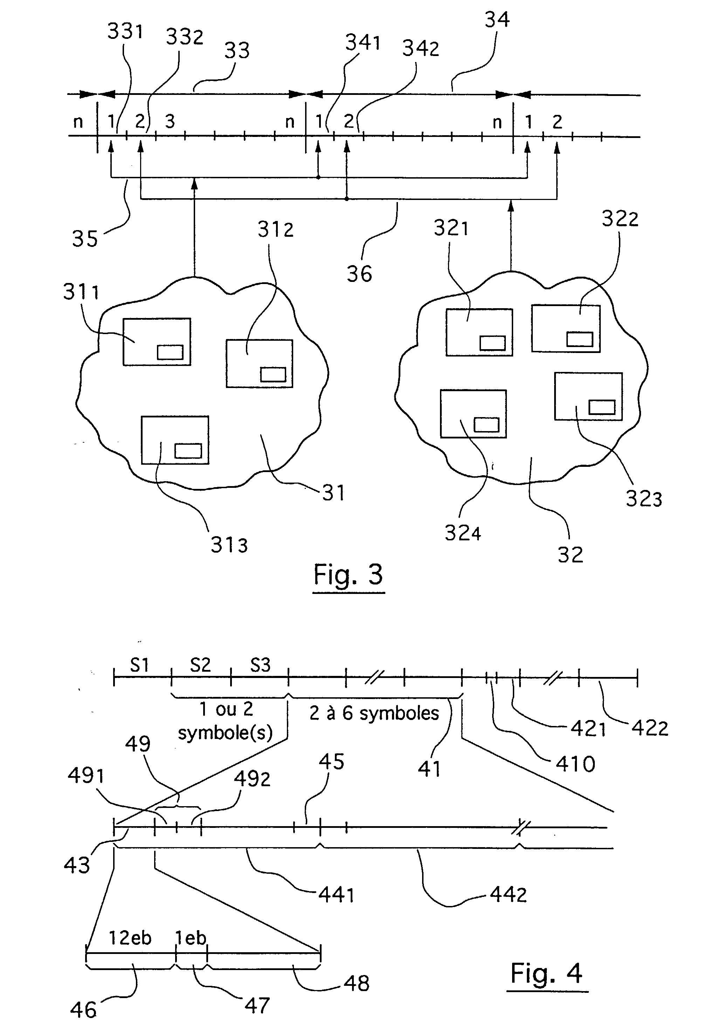

La partie d'émission I comprend tout d'abord un multiplexeur 13. Ce multiplexeur reçoit des données numériques issues de différentes sources $14_1$, $14_2$, $14_3$ et $14_4$, et organise ces données en trames de données. Un exemple de structure de trame est détaillé par la suite, en liaison avec la figure 4.

Les sources de données $14_1$ à $14_3$ peuvent par exemple être des programmes audionumériques, des programmes de télévision ou des programmes télématiques. La source de données $14_4$ est une source de messages de radiomessagerie.

Bien qu'une seule source de radiomessagerie $14_4$ soit illustrée, il est clair que plusieurs sources distinctes peuvent être utilisées, éventuellement avec des niveaux de priorités distincts. Dans ce cas, les priorités seront par exemple gérées par le multiplexeur 13.

La source de radiomessagerie $14_4$ reçoit (16) les messages à émettre de façon classique, par l'intermédiaire d'un poste téléphonique ou d'un terminal de vidéotext. L'expéditeur d'un message appelle la source $14_4$, puis lui communique le numéro d'abonné du destinataire et le message associé.

D'autres types de liaisons peuvent bien sûr être envisagés. Ainsi, notamment dans le cas de transmission de documents ou d'images, on utilisera avantageusement le réseau numérique à intégration de services (RNIS), voire une ligne spécialisée.

Par ailleurs, cette source de radiomessagerie $14_4$ peut éventuellement gérer une messagerie vocale et/ou une messagerie télématique, que le possesseur d'un récepteur peut consulter, à réception d'un message, pour obtenir des informations complémentaires.

Les liaisons $15_1$ à $15_4$ entre les différentes sources de données $14_1$ à $14_4$ et le multiplexeur 13 peuvent être indifféremment directes, ou emprunter tout type de réseau de transmission (réseau téléphonique, réseau spécialisé, liaison hertzienne, satellite,...). Il est donc tout à fait possible que les sources $14_1$ à $14_4$ et le multiplexeur 13 soient situés en des emplacements géographiques différents.

Si les données de radiomessagerie $15_4$ délivrées par la source $14_4$ doivent être synchrones avec la trame en cours d'élaboration dans le multiplexeur 13 (ainsi qu'on le verra par la suite seules certaines trames peuvent transporter un message destiné à un récepteur donné), le multiplexeur 13 fournit à la source $14_4$ une information 17 de synchronisation. Cette information est avantageusement le numéro de la trame en cours d'élaboration ou le numéro de la trame suivante.

Si le multiplexeur 13 gère lui-même l'affectation des messages aux trames (il peut recevoir à tout instant un message et le numéro identifiant son destinataire), l'information de synchronisation 17 n'est pas nécessaire. La liaison $15_4$ contient alors en effet directement le ou les numéro(s) des trames sur lesquelles on doit insérer l'information.

Les trames sont ensuite dirigées (18) vers les moyens d'émission 19. Ces moyens d'émission peuvent être de tout type connu, adapté aux symboles à émettre.

A titre d'exemple, on rappelle ci-dessous brièvement les principes de la technique de modulation COFDM.

Ainsi que cela est notamment décrit dans le brevet français FR-A-2601210 du 2 juillet 1986 aux noms des mêmes déposants, et dans l'article "Principes de modulation et de codage canal en radiodiffusion numérique vers les mobiles" de M.Alard et R.Lassalle (Revue de l'UER, n° 224, août 1987, p. 168-190), le système de diffusion numérique COFDM est basé sur l'utilisation conjointe d'un dispositif de codage de canal et d'un procédé de modulation par multiplexage de fréquences orthogonales.

Le codage canal met en oeuvre un code convolutif.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

De façon connue, les données sont organisées en trames successives, par exemple selon le procédé décrit dans la demande de brevet FR-A-2670969 déposé le 19.12.90,au nom des mêmes déposants.

Chaque trame est constituée de symboles consécutifs, un symbole étant un ensemble de fréquences porteuses orthogonales modulées chacune par un ou plusieurs éléments binaires et émises simultanément.

Ces trames sont constituées d'unités élémentaires qui sont constituées d'un ou plusieurs symboles ou portions de symboles consécutifs. Ces unités élémentaires ont un format fixe, identique pour toutes les unités.

Elles peuvent correspondre à un nombre entier de symboles, mais cela n'est nullement obligatoire. On peut tout à fait choisir, en fonction des besoins, une granularité élémentaire quelconque.

Par la suite, pour des raisons de simplification, on considère le cas particulier où une unité élémentaire correspond à un symbole. On utilisera d'ailleurs systématiquement le terme symbole en lieu et place du terme unité élémentaire. Il est clair toutefois que ce cas particulier n'est pas limitatif.

Les trames sont ensuite subdivisées en canaux. Un canal est donc constitué d'une suite d'un ou plusieurs symboles (unités élémentaires) consécutifs, toujours situés au même emplacement sur toutes les trames. Cette structuration est reconfigurable en fonction des besoins.

La figure 2 est un exemple d'une telle organisation, montrant des canaux constitués d'un nombre entier de symboles.

Chaque trame débute avantageusement par trois symboles particuliers S1, S2 et S3 dont le rôle est précisé par la suite. Elle comprend ensuite un certain nombre de symboles utiles S4 à SN, comprenant chacun N porteuses orthogonales modulées 21.

Le symbole S1 est un symbole nul, permettant d'une part d'effectuer une synchronisation analogique, et d'autre part d'effectuer l'analyse spectrale du canal de diffusion. Le symbole S2 est un second symbole de synchronisation constitué par un multiplex non modulé de toutes les fréquences porteuses, à enveloppe sensiblement constante. Cela permet de recaler plus précisément la synchronisation par analyse de la réponse impulsionnelle du canal. Le rôle et le mode de réalisation de ces symboles S1 et S2 sont décrits dans le brevet EP-A-369917, au nom des mêmes déposants.

Bien sûr, ces symboles de synchronisation ne sont pas obligatoires vis-à-vis de l'invention.

Le symbole S3 est quant à lui un symbole de vobulation, donnant une référence de phase pour la démodulation de chaque porteuse des symboles suivants, lorsque celles-ci sont modulées différentiellement. Le cas échéant, la fonction de référence de phase remplie par S3 pourrait être remplie par le symbole S2, les deux symboles S2 et S3 étant ainsi en quelque sorte "fusionnés" en un seul symbole S'2 (ou TFPC).

L'allocation de la ressource s'effectue en attribuant à chaque application un ou plusieurs canaux (une application correspondant par exemple à une des sources de données de la figure 1), et en fixant la taille (en nombre de symboles) de chacun de ces canaux.

Ainsi, à une première application, ne nécessitant qu'un symbole, on affecte le canal Cn, correspondant dans toutes les trames au symbole Sm. En revanche, pour une autre application ayant un débit plus important, on définit le canal Ck correspondant aux symboles consécutifs Si à Sj.

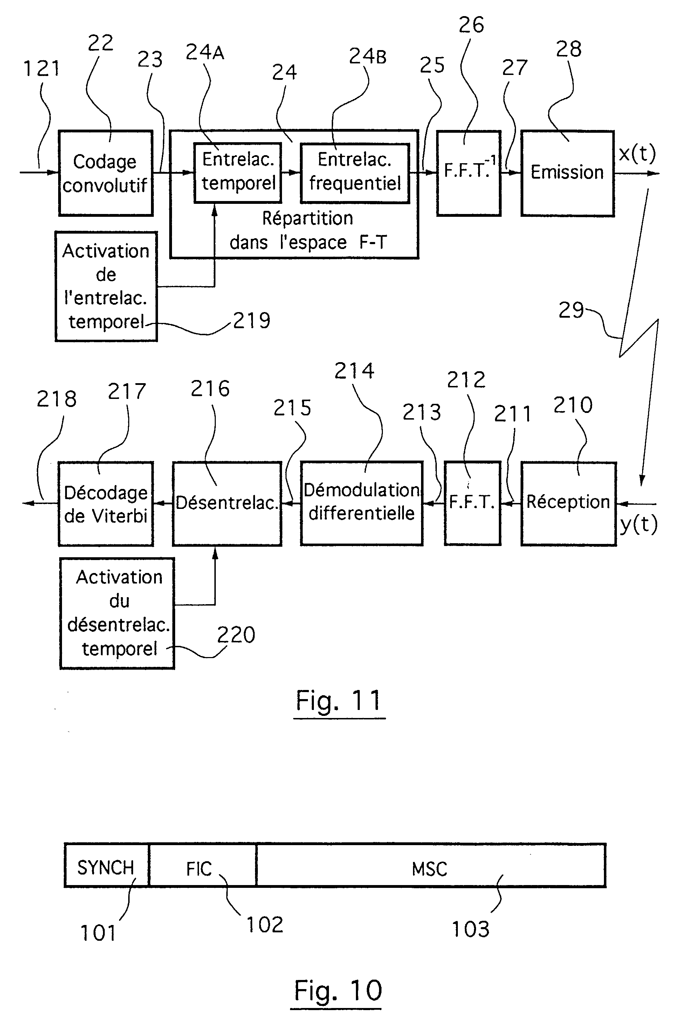

Selon l'invention, un canal est ainsi réservé (au moins en partie) au transport des données de radiomessagerie. La figure 10 présente schématiquement la structure d'une trame selon l'invention.

Cette trame peut être décomposée en trois sous-ensembles :

- une partie de synchronisation 101, pouvant par exemple contenir un symbole vide de synchronisation analogique et un symbole de synchronisation temporelle et fréquentielle (TFPC) ;
- un canal d'informations rapides 102 (FIC : "Fast Informations Channel" en anglo-saxon), dans lequel les données ne sont pas entrelacées temporellement ;
- une partie 103 de données entrelacées temporellement (MSC : "Main Service Channel" en anglo-saxon).

La figure 3 illustre le principe général de l'invention.

Les abonnés, représentés ici par leurs récepteurs $31_1$ à $31_3$ et $32_1$ à $32_4$, sont regroupés en familles (respectivement familles 31 et 32), de façon à répartir au mieux les appels et à éviter des retards importants à la diffusion.

Ce regroupement en famille tient notamment compte du type d'abonnement choisi (par exemple : niveau de priorité), de la couverture géographique pour laquelle l'abonnement est souscrit, dans le cas des réseaux à diffusion cellulaire, etc...

Si plusieurs réseaux de diffusion indépendants coexistent et participent au service de radiomessagerie, les familles sont réparties sur ces différents réseaux, en fonction des abonnements souscrits.

Les trames de données $33_1$, $33_2$, $34_1$, $34_2$ sont regroupées en cycles d'émission 33, 34, constitué chacun d'un même nombre M de trames. La durée d'un cycle est par exemple de l'ordre d'une à deux minutes.

A chaque famille d'abonnés 31, 32 est affectée une trame particulière $33_1$, $33_2$ (ou un groupe de trames) du cycle d'émission 33. Ainsi, chaque récepteur $31_1$ à $31_3$ de la famille 31 est susceptible de ne trouver des messages qui lui sont destinés uniquement dans les premières trames $33_1$, $34_1$ de chaque cycle 33, 34.

De cette façon, un fonctionnement intermittent des récepteurs est possible. Les récepteurs de la famille 31 ne s'éveillent que pour lire (35) les premières trames de chaque cycle. De même, les récepteurs de la famille 32 ne lisent (36) que les secondes trames $33_2$, $34_2$ de chaque cycle 33, 34.

Selon la caractéristique essentielle de l'invention, cette fonction est rendue possible par la numérotation des trames. Chaque trame d'un cycle se voit affectée un numéro distinct. Le ou les numéros des trames associées à une famille sont connus de chaque récepteur de cette famille. Ils font partis de l'identification de ces récepteurs.

Ces numéros permettent aux récepteurs de se synchroniser, puis de surveiller régulièrement la trame ou les trames qui lui sont allouées, pour savoir si un message leur est destiné. Ils permettent à un récepteur de déterminer très rapidement s'il est désynchronisé, par simple comparaison du numéro lu avec le numéro alloué.

La resynchronisation, ou la synchronisation initiale, est également très aisée. Le récepteur détermine l'erreur de synchronisation entre le numéro lu et le numéro alloué, décale dans le temps l'instant du réveil en fonction de cette erreur de synchronisation, puis s'éveille régulièrement aux instants corrects.

Pour faciliter le fonctionnement des récepteurs et limiter leur consommation électrique, le numéro de trame est préférentiellement placé en début de trame. Dans le cas d'une trame COFDM (figure 2), il sera placé dans le premier symbole utile suivant les symboles de synchronisation et de vobulation S1 à S3.

Dans les mêmes objectifs, il est également souhaitable que les messages de radiomessagerie suivent directement le numéro de trame, dans le même symbole et éventuellement les symboles directement suivants.

Un message peut également être réparti sur plusieurs débuts de trames consécutives, si la capacité d'une trame est insuffisante.

Si les données utiles de radiomessagerie ne peuvent pas être placées directement dans le premier symbole de données S4 (par exemple pour des raisons de normalisation), on prévoira dans ce premier symbole des informations d'assistance, indiquant la présence de messages de radiomessagerie à suivre. Ainsi, dans le cas où aucun message n'est présent, les récepteurs n'effectueront aucune tâche inutile de recherche de message, et retourneront tout de suite en veille.

En d'autres termes, le premier symbole comprend d'une part le numéro de trame, et d'autre part une information de présence de message, qui peut être soit le message lui-même, soit un drapeau indicateur de présence.

Un exemple de trame selon l'invention est illustré en figure 4.

Cette trame comprend classiquement tout d'abord les symboles S1, S2 et S3 décrits ci-dessus. Les symboles S2 et S3 peuvent être réunis dans un symbole unique, assurant les mêmes fonctions de synchronisation temporelle et fréquentielle, généralement désigné par TFPC.

Un premier canal 41, dit canal de radiomessagerie, ou plus généralement canal d'informations rapides, suit directement les symboles S1 à S3. Différents canaux spécifiques $42_1, 42_2$ correspondant à différentes applications, viennent ensuite.

Le canal d'informations rapides 41 est par exemple constitué de 2 à 6 symboles successifs. Il comporte un entête 43, et un ensemble de données organisées (par exemple) en unités d'information successives $44_1, 44_2, ..$ . Avantageusement, des éléments binaires de contrôle de parité (CRC) 45 sont associés à chaque unité d'information.

L'en-tête 43 porte d'une part le numéro 46 de la trame en cours, codé par exemple sur 12 éléments binaires et différents indicateurs sur les données présentes dans le canal d'informations rapides :

- un drapeau 47 indicateur de la présence d'unités d'information dans la trame ;
- plusieurs drapeaux 48 indicateurs de la présence d'informations correspondant à un service donné.

En effet, le canal d'informations rapides 41 n'est pas réservé uniquement aux données de radiomessagerie (ce qui correspond à un des services), mais peut porter également diverses informations, telles que, par exemple, une description de la structuration en canaux de la trame.

L'organisation des unités d'information, non précisée ici, est clairement une simple question de convention. Par ailleurs, il est clair que la structuration même de trame est donnée à titre indicatif, et que de nombreuses variantes peuvent être envisagées.

La technique COFDM propose que les données soient entrelacées en temps et en fréquence, de façon à assurer une indépendance maximum entre les données transmises. Toutefois, selon l'invention, le canal d'informations rapides ne présente pas d'entrelacement en temps.

Cela permet en effet un décodage plus rapide des données (du fait de l'absence de désentrelacement), et notamment un décodage direct des premières données, portant notamment l'en-tête de la trame.

Par ailleurs, cela permet de limiter les traitements à effectuer, et donc de réduire la consommation électrique des récepteurs. En effet, la plupart du temps, aucun message n'est destiné à un récepteur donné (la présence d'un message est un évènement rare, par rapport à la durée d'un cycle). La seule opération à effectuer est donc la lecture du numéro de trame, puis la vérification qu'aucun message n'est présent. Du fait de l'absence d'entrelacement ces opérations sont rapides et simples.

Avantageusement, les données de radiomessagerie sont codées à l'aide d'un code détecteur ou correcteur d'erreurs. Selon un mode de réalisation préférentiel de l'invention, on utilise un code convolutif systématique. Par exemple, il peut s'agir d'un code de longueur de contrainte 7 et de rendement fixe de 1/2, utilisant les polynomes générateurs 0155 et 0117 (en codage octal).

Les données de radiomessagerie contenues dans le canal d'informations rapides ne peuvent bien sûr avoir qu'une taille limitée. Il peut donc s'agir de courts messages alphanumériques (par exemple un numéro de téléphone).

Toutefois, le procédé de l'invention permet de transmettre des messages beaucoup plus longs (images, documents,...) vers des récepteurs haut de gamme. Pour cela, le message 49 contenu dans le canal de radiomessagerie destiné à l'un de ces récepteurs comprend tout d'abord (comme bien sûr tout message) une information $49_1$ identifiant le récepteur destinataire 1 et une information utile $49_2$ comprenant des pointeurs renvoyant vers des données complémentaires 410 stockées dans un autre canal $42_1$.

Ces pointeurs $49_2$ désignent par exemple un ensemble de paquets présents dans un canal spécialisé $42_1$ réservé (au moins en partie) à cet usage. Les données présentes dans ce canal, de même que toutes les données présentes dans les canaux $42_1, 42_2$ (c'est-à-dire tous les canaux autres que le canal d'informations rapides 41) sont entrelacées en temps et en fréquence.

Les pointeurs désignent donc le début (et optionnellement la fin) d'un bloc d'informations contenu dans un canal (ou plusieurs) complémentaire d'une même trame ou de tout autre trame (ou de plusieurs) d'un même cycle, ou encore, en intégrant une information de temps absolu trouvée par ailleurs dans le canal d'informations rapides, de toute trame (ou de plusieurs) véhiculées par le signal COFDM support. Le chaînage des données du bloc d'informations suit les règles définies pour toutes les informations transportées par le signal COFDM.

Plus généralement, la technique des pointeurs peut être utilsée par des services différents de la radiomessagerie, par exemple pour une répartition temporelle de ces derniers.

Il est à noter que cette technique est très différente de celle décrite dans le document WO 86/03645 déjà discuté, basée sur une approche classique consistant à effectuer un chaînage utilisant la numérotation des intervalles de temps.

Il est donc nécessaire que les récepteurs haut de gamme comprennent des moyens de désentrelacement. Toutefois, ces moyens sont mis en oeuvre rarement (uniquement lorsqu'un message destiné au récepteur est présent). Le reste du temps, seul le début du canal d'informations rapides est décodé.

Les récepteurs haut de gamme comprennent donc deux unités sensiblement indépendantes :

- d'une part une unité de radiomessagerie, scrutant périodiquement le canal d'informations rapides. Il s'agit en fait de moyens de réception correspondants aux moyens présents dans les récepteurs de radiomessagerie plus simples décrits ci-dessous ;
- d'autre part une unité de réception classique COFDM, pour décoder les données complémentaires. Il s'agit de moyens classiques (identiques à ceux existant dans les récepteurs COFDM connus), qui ne sont donc pas décrits par la suite.

Un récepteur haut de gamme peut donc intégrer un écran de visualisation (par exemple un écran plat, pour les récepteurs portables), permettant l'affichage d'une image ou d'un texte. On peut également prévoir un clavier, permettant de faire défiler le texte sur l'écran.

Cet écran peut aussi être accompagné d'une imprimante (ou être remplacé par cette imprimante). Plus généralement, tout moyen de restitution et de stockage (disquette magnétique, disque dur, carte mémoire, ...) peut être associé à ces récepteurs haut de gamme.

Par ailleurs, ainsi qu'on l'a mentionné, d'autres applications que l'appel de personnes peuvent être envisagées. Par exemple, les récepteurs peuvent être des micro-ordinateurs portables, téléchargeables automatiquement à l'aide de données émises dans les canaux complémentaires de radiomessagerie.

Il est à noter que, dans ce cas particulier, les temps de cycle (période de récurrence) peuvent être beaucoup plus grande (par exemple quelques heures). En revanche, il est possible de répartir des données à transmettre sur de nombreuses trames, notamment dans le cas de documents très importants.

Par un choix habile de la numérotation des trames, il est possible de faire cohabiter plusieurs services présentant des périodes de récurrence différentes, soit en associant aux récepteurs de services à faible période de récurrence plusieurs numéros de trame, soit en intégrant l'heure courante dans la logique de prise en compte des trames, de façon qu'un récepteur donné ne prenne pas en considération toutes les trames possédant un même numéro prédéterminé qu'il reçoit au cours des cycles successifs, mais seulement celles de ces trames qu'il reçoit à des périodes de temps prédéterminées, c'est-à-dire en fonction de l'heure courante de réception de la trame.

On décrit maintenant différents types de récepteurs pouvant être utilisés selon l'invention.

Tout d'abord, on prévoit des récepteurs à fonctionnement continu, pour les cas où les problèmes d'alimentation en énergie sont résolus par ailleurs (récepteurs non autonomes). Ce type de récepteurs pose peu de problèmes, par rapport aux récepteurs de radiodiffusion connus pour le système DAB.

En effet, les méthodes de synchronisation peuvent être identiques. De plus, le décodage ne se fait pas en permanence, mais uniquement sur les trames affectées au récepteur.

Ainsi, les traitements à effectuer se font sur un nombre réduit de symboles de chaque cycle de trames (quelques 10e de secondes, au plus, sur une ou deux minutes). Ils peuvent donc être réalisés en différé, à l'aide d'un seul processeur de traitement de données de moyenne gamme.

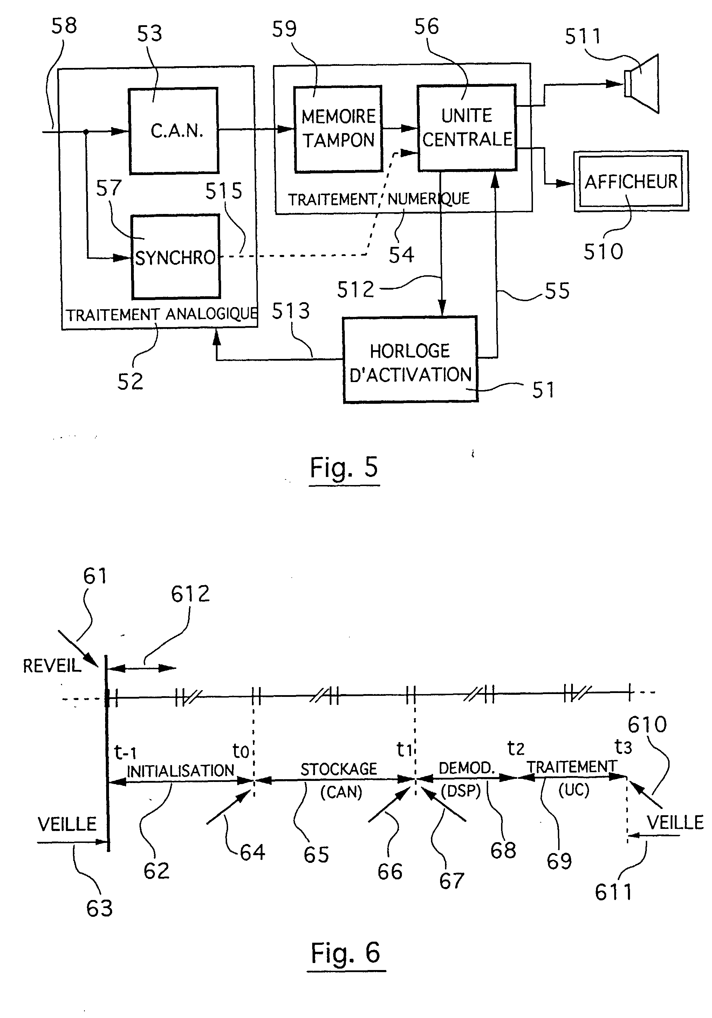

Le cas le plus courant est toutefois celui des récepteurs à fonctionnement discontinu ou pseudo-continu. La figure 5 est un schéma synoptique général d'un tel récepteur (à l'exclusion du timer et donc de la fonction veille, cette figure 5 peut également s'appliquer aux récepteurs à fonctionnement continu).

Les récepteurs portables, ou plus généralement autonomes, disposent donc d'une fonction de veille, de façon que ces récepteurs soient en activité uniquement aux instants d'émission d'une trame qui leur est affectée. Le reste du temps, seule une horloge d'activation périodique 51, à consommation très faible, est alimentée. Ainsi, l'autonomie des récepteurs peut être importante.

Le rôle de cette horloge 51 est donc de commander l'activation (le "réveil") des différents moyens de traitement du récepteur, à des instants prédéterminés. Si les traitements se font en temps différé (ainsi que cela sera expliqué par la suite), et pour une taille de mémoire tampon raisonnable, il faut que cette horloge assure un réveil avec une précision de l'ordre de 5 ms sur une minute.

Les moyens de traitement d'un récepteur peuvent être divisés en deux grandes parties :

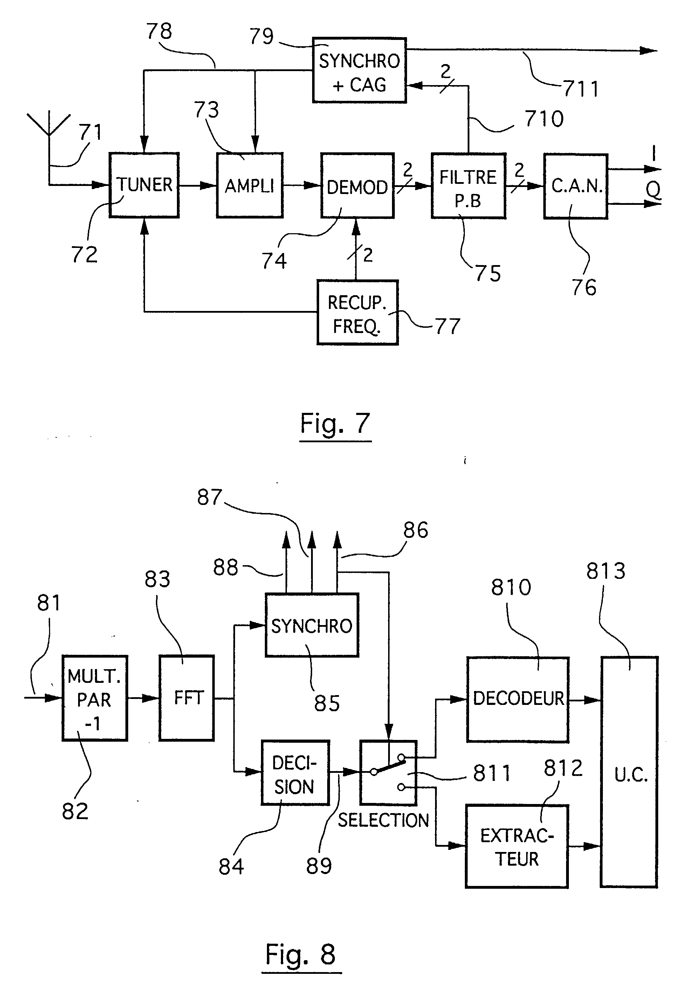

- les moyens 52 de traitement analogique, incluant la conversion analogique/numérique 53 (décrits plus en détail par la suite en liaison avec la figure 7) ;
- les moyens 54 de traitement numérique (décrits plus en détail par la suite en liaison avec la figure 8).

L'horloge d'activation 51 commande régulièrement (55) le réveil d'au moins une unité centrale numérique 56, qui gère l'ensemble du fonctionnement du récepteur et effectue les différents traitements numériques.

Les moyens 52 de traitement analogique contiennent notamment des moyens 57 de synchronisation sur le début d'une trame qui envoient une information de synchronisation 515 à l'unité centrale 56. L'unité centrale 56 est ainsi à même de piloter l'ensemble des moyens de traitement en fonction de l'information de synchronisation, et notamment d'ouvrir les fenêtres de traitement du signal reçu en temps opportun. L'information de synchronisation est générée par les moyens 57 de synchronisation par détection du symbole S1 (figure 2) dans le signal reçu 58.

Les symboles du canal de radiomessagerie sont ensuite numérisés, à l'aide du convertisseur analogique/numérique (CAN) 53, puis stockés dans une mémoire tampon 59. Celle-ci permet que les traitements effectués par l'unité centrale 56 soit faits en temps différé pour tout ou partie des symboles. Bien sûr, si l'unité centrale est capable d'effectuer ces traitements en temps réel, la mémoire tampon 59 est supprimée, et les données numérisées par le CAN 53 sont transmises directement à l'unité centrale 56.

Le rôle de cette unité centrale est d'analyser les données reçues, et d'en extraire, le cas échéant, un message qui lui est destiné. Ce message est alors par exemple présenté au possesseur du récepteur sur un afficheur 510. Un signal sonore 511 peut également être émis.

L'unité centrale 56 contrôle également le fonctionnement de l'horloge 51. Si le numéro de la trame en cours de traitement ne correspond pas à un numéro affecté au récepteur, elle envoie une information 512 de recalage de l'horloge.

Dans la pratique, cette unité centrale 56 peut être constituée :

- d'un micro-processeur (par exemple de la famille 68 000 de MOTOROLA (marques déposées)) ;
- d'un processeur de traitement de signal (DSP) (par exemple un 56156 de TEXAS-INSTRUMENTS (marques déposées)) ;
- de l'association d'un micro-contrôleur et d'un processeur de traitement de signal.

Dans ce dernier cas, chaque composant ne travaille que lorsque cela est nécessaire pour sa fonction, de façon à limiter la consommation d'énergie.

Plus généralement, il est avantageux que chaque partie du récepteur ne soit alimentée uniquement lorsque cela est nécessaire. Ainsi, sur la figure 5, on a fait apparaître deux commandes d'activation distinctes 55 et 513 générées par l'horloge 51, destinée respectivement aux moyens numériques 54 et aux moyens analogiques 52. Dans la pratique, la commande 513 peut également être émise par l'unité centrale 56.

Par ailleurs, ainsi que cela est illustré en figure 6, la décomposition de l'activation sélective peut se faire de façon plus précise encore.

Ainsi, la figure 6 illustre un exemple de répartition dans le temps du fonctionnement d'un récepteur. Il s'agit bien entendu d'un exemple particulier, non restrictif.

L'horloge d'activation commande le réveil 61, à l'instant $t_{-1}$, du récepteur, ou plus précisément des moyens de synchronisation trame et d'acquisition du CAG. Il s'agit en fait d'une opération d'initialisation 62, effectuée sur au moins deux trames précédant la ou les trames associées au récepteur (la flèche 612 illustre la durée d'une trame).

Auparavant, le récepteur était en veille totale 63 (seule l'horloge était alimentée).

L'opération d'initialisation 62 terminée, les différents moyens actifs ne sont plus alimentés. A l'instant $t_0$ correspondant à la (première) trame associée au récepteur, un ordre 64 de réveil du convertisseur analogique/numérique est généré. Pendant la durée 65 correspondant aux n trames consécutives associées au récepteur (n pouvant bien sûr être égal à 1), les débuts de ces trames, c'est-à-dire notamment les canaux de radiomessagerie, sont stockés dans la mémoire tampon.

Ensuite, à l'instant $t_1$, un ordre 66 d'arrêt de la partie analogique et du CAN est émis. Au même instant $t_1$, un ordre d'activation 67 est transmis à l'unité centrale numérique, qui effectue la démodulation des données 68 puis le traitement des applications 69.

A la fin des traitements (instant $t_3$) un ordre 610 de mise en sommeil du récepteur est émis, qui entraine le retour à l'état de veille 611.

Dans le cas où deux processeurs sont présents, le DSP est activé de l'instant $t_1$ à $t_2$, pour la démodulation 68, et le microcontrôleur est activé de l'instant $t_2$ à $t_3$, pour le traitement des applications 69.

La durée d'activation du récepteur (durée $t_{-1}$ à $t_3$) est au maximum de l'ordre de quelques secondes, pour un temps de cycle (période de récurrence de l'ordre d'une à deux minutes).

Il est à noter que plusieurs méthodes de traitement peuvent être envisagées:

- fonctionnement en temps réel sur tous les symboles de synchronisation trame, avec mémorisation des symboles utiles à la fin de la phase de synchronisation (c'est le cas illustré en figure 6) ;
- fonctionnement en temps réel sur les deux symboles de synchronisation trame (symbole nul S1 et de CAF S2) avec mémorisation des symboles utiles y compris le symbole de synchronisation temporel (symbole de vobulation S3) ;
- fonctionnement en différé total (si les problèmes de précision des fréquences sont résolus par ailleurs et si la détection de la synchronisation trame est sûre) ;
- fonctionnement en temps réel sur tous les symboles nécessaires au service de radiomessagerie (nécessaire pour les services haut de gamme). Dans ce cas, le décodage de l'information binaire est aussi effectué en temps réel.

Par conséquent il est possible de simplifier les systèmes de synchronisation sur le service. Le processus de traitement peut regarder chaque numéro de trame ainsi que le contenu de chaque symbole réservé à la radiomessagerie, constater un appel et savoir l'identifier.

On décrit maintenant plus en détail, la structure de la partie analogique d'un récepteur, en liaison avec la figure 7.

Les signaux émis sont captés à l'aide d'une antenne 71, et transmis à un tuner 72. Il est judicieux de choisir un tuner qui incorpore aussi les fonctions oscillateur local et synthoniseur. La fréquence d'oscillation doit pouvoir être commandée par le microcontrôleur gérant l'application de radiomessagerie.

Le tuner transmet le signal reçu à un amplificateur de fréquence intermédiaire 73. Celui-ci utilise de préférence un filtre à onde de surface (FOS) dont le gabarit de filtrage limite les possibilités de rattrapage du décalage de l'oscillateur local par calcul numérique avant transformation de Fourier (FFT).

Le signal est ensuite démodulé en quadrature (74), de façon classique. Il est également possible de s'affranchir de la démodulation d'un des signaux en complexifiant les traitements numériques. Le principal avantage de cette solution pour cette fonction est de ne pas demander la génération d'un deuxième signal de démodulation déphasé de 90°.

D'autres techniques de démodulation sont envisageables et notamment :

- démodulation numérique des deux signaux I et Q après une transposition du spectre autour d'une porteuse suffisamment basse pour pouvoir travailler en numérique,
- démodulation analogique ou numérique d'un seul des signaux,
- transposition autour d'une porteuse "basse fréquence" du spectre et un traitement de la démodulation directement en numérique.

Les composantes démodulées I et Q délivrées par le démodulateur 74 sont filtrées à l'aide d'un filtre passe-bas 75, qui permet d'éliminer les résidus de hautes-fréquences présents dans les signaux mais aussi et surtout de préparer les signaux pour la conversion analogique-numérique.

Les signaux filtrés sont enfin convertis en données numériques, par le convertisseur analogique/numérique 76. Les conversions analogique-numérique peuvent être assurées par un seul convertisseur travaillant à deux fois la fréquence normale si l'on insère un multiplexeur analogique rapide devant, ou par deux convertisseurs en parallèle.

La récupération 77 de la fréquence pilote est par exemple assurée à l'aide d'un quartz de haute précision ou à partir du signal de référence de CAF (symbole S2).

La commande automatique de gain 78 est générée par un module 79 de synchronisation et d'extraction de CAG à l'aide des deux composantes I et Q 710. Une tension proportionnelle à I*I + Q*Q commande les entrées CAG du tuner 72 et de la partie d'amplification de fréquence intermédiaire 73.

Avantageusement, le signal de CAG 78 avant filtrage contient une information sur les perturbations introduites dans le canal.

Par ailleurs, du module d'extraction du signal de CAG 79 on peut extraire le signal de synchronisation trame 711 par filtrage et passage dans un comparateur. Cette technique peut être envisagée pour des récepteurs à fonctionnement continu ou pseudo-continu (traitement des symboles de CAF et de vobulation en temps réel).

La figure 8 présente un synoptique de la partie numérique du récepteur. Les données numériques 81 sont tout d'abord démodulées.

Classiquement, la démodulation des données 81 combine plusieurs traitements. Le premier consiste à multiplier (82) les échantillons reçus par -1 pour retransposer le spectre du signal et, pour le symbole dédié au CAF, à effectuer la multiplication de tous les échantillons par un nombre qui dépend de la position de l'échantillon dans le symbole (fenêtre de filtrage de Hanning).

Ensuite une transformation de Fourier (FFT) 83 est effectuée sur les échantillons (hors intervalle de garde) de tous les symboles.

Le résultat de ce traitement est exploité différemment si un symbole est de synchronisation ou de données. Pour ces derniers, la phase des échantillons est exploitée dans un module de décision 84 pour déterminer la valeur des dibits (deux éléments binaires) en fonction de la valeur de la phase de chaque échantillon du symbole précédent (dans le cas d'un codage différentiel à 4 états de phase (4-PSK)).

Le premier symbole de données a une position stratégique car il n'entraîne pas de calcul supplémentaire de FFT. C'est pour cette raison qu'au moins l'en-tête est placé dans ce premier symbole.

Les traitements 85 sur les symboles de synchronisation sont spécifiques de la fonction à réaliser. Le symbole nul de synchronisation 51 permet d'estimer la qualité du canal 86 (en particulier la détection de fréquences parasites ou le niveau de bruit). Le symbole dit de CAF 52 permet d'estimer et donc de corriger l'erreur sur la fréquence porteuse 87. Le symbole dit de vobulation 53 permet de situer précisément la fenêtre de travail 88 de la FFT. Il permet de détecter aussi la présence d'écho fort. Ces deux derniers symboles peuvent éventuellement être regroupés en un seul. Le traitement du signal de CAF est nécessaire si l'on traite en numérique les recalages de fréquence.

Les données démodulées 89 sont ensuite présentées à l'entrée d'un décodeur 810 pour le traitement de la convolution faite à l'émission. L'estimation de la qualité du canal de transmission peut être ici utilisée, soit pour simplifier les traitements si un code systématique est utilisé, soit pour pondérer les valeurs présentées à un décodeur de Viterbi à décision douce.

Ainsi, le module de sélection 811, en tenant compte de l'information d'estimation 86, peut choisir de ne pas effectuer de décodage, si la qualité de la transmission est bonne. Cela est aisé, si l'on utilise un codage convolutif systématique. Les données utiles existent donc en clair parmi l'ensemble des données reçues. Il suffit donc, dans l'extracteur 812, de séparer les données utiles des données de redondance. Cette opération simple est plus rapide et consomme moins d'énergie que le décodage de Viterbi.

Pour les services haut de gamme la démodulation doit aussi porter sur le canal contenant les données d'accompagnement, il s'ajoute alors le traitement du désentrelacement avant le passage dans le décodeur de Viterbi.

Dans l'application de radiomessagerie, la sortie des informations binaires (remontée des survivants) peut se faire à partir d'un nombre de valeurs entrées suffisant pour que tous les bits de décision de l'application soient traités. Cette condition implique la mise au début du premier symbole des informations nécessaires à la radiomessagerie.

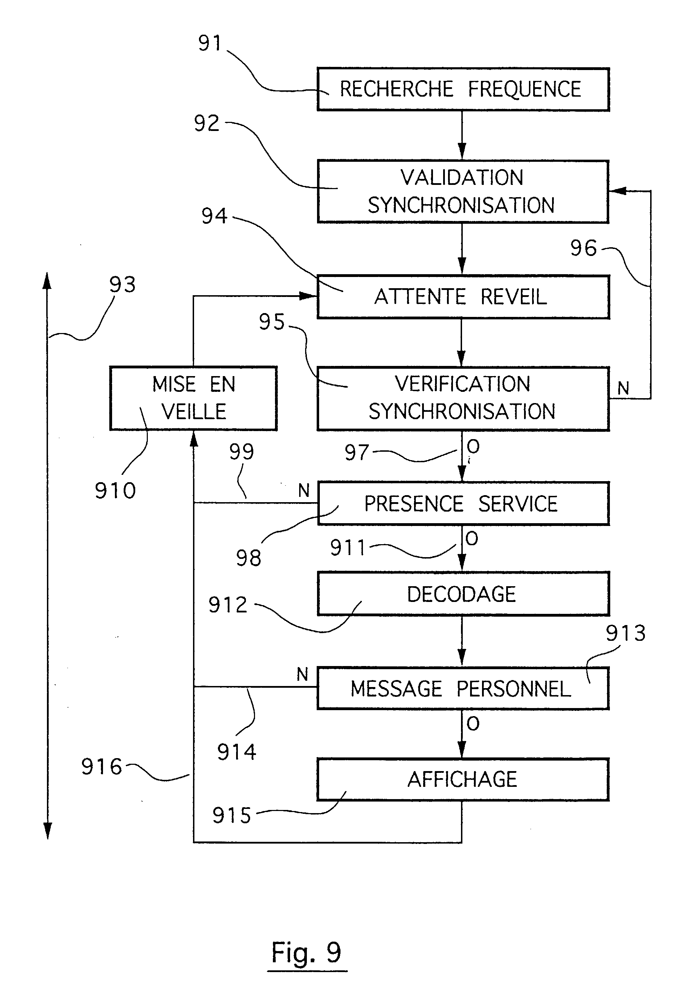

Les données décodées sont ensuite transmises à l'unité de traitement de radiomessagerie 813, dont un mode préférentiel de fonctionnement est illustré par l'organigramme de la figure 9.

Bien sûr, l'implémentation de ce qui suit sera sensiblement différent suivant que le récepteur est à fonctionnement continu, pseudo-continu ou différé.

Dans le cas d'un réseau cellulaire, le récepteur cherche tout d'abord, parmi les fréquences qui lui sont affectées, la fréquence (91) sur laquelle le rapport signal sur bruit est le plus favorable avant d'effectuer les traitements à suivre.

Le récepteur doit ensuite dans une première phase 92, se synchroniser. Pour cela, après accrochage sur la trame DAB et mémorisation d'au moins deux débuts de trame, il décode le numéro des trames dont il a mémorisé les symboles utiles de synchronisation ainsi que les premiers symboles de données. Après vérification de la cohérence des numéros des trames reçues et un calcul sur l'écart de temps entre ces trames et la ou les trames qui lui sont dédiées, il valide un timer permettant de se réveiller peu de temps avant l'apparition des trames qui lui sont destinées.

On entre ensuite dans un fonctionnement cyclique (répétition du cycle de fonctionnement 93). Le récepteur est le plus souvent en attente de réveil 94, jusqu'à ce que le timer commande le réveil.

A cet instant, la première opération est la vérification 95 de la synchronisation. Le récepteur détecte une désynchronisation si les numéros de trame qu'il décode ne sont pas ceux attendus. Dans ce cas (96), il se repositionne dans l'état précédent 92.

S'il est bien accroché (97), il regarde (98) dans le champs "présence des services" (si ce champ est présent) ou en début du premier symbole de données, s'il existe une information radiomessagerie. Si ce n'est pas le cas (99), alors le récepteur se remet en sommeil (910) et attend (94) le prochain cycle. Dans le cas contraire (911), il décode (912) l'information de radiomessagerie.

De la même manière, il vérifie (913) si le message lui est destiné. Si le message n'est pas pour lui (914) il s'endort. Si le message est pour lui, il le présente à l'utilisateur (bip sonore, affichage, etc...) (915) puis retourne (916) en sommeil (910).

Après avoir décrit les caractéristiques de l'invention, on rappelle maintenant les caractéristiques (connues en elles-mêmes) d'un système de diffusion de signaux COFDM, appliqué au cas particulier de l'invention (activation sélective de l'entrelacement en temps).

Le système de diffusion numérique connu sous le nom de système COFDM (Coded Orthogonal Frequency Division Multiplex (multiplexage de fréquences orthogonales codées)) est décrit notamment dans le brevet français FR-86 09622 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190).

Il repose notamment sur la combinaison de deux principes essentiels.

Le premier principe est la répartition de l'information à transmettre sur un grand nombre de porteuses modulées chacune à un faible débit, afin de réduire l'effet de sélectivité du canal de transmission (signal COFDM).

Le second principe du système COFDM consiste à corréler par un procédé de codage des éléments d'information consécutifs (codage canal) et à les transmettre en des points distants du domaine temps-fréquence (technique de l'entrelacement en temps et en fréquence). L'éloignement de ces points est choisi de façon à assurer l'indépendance statistique entre deux éléments successifs d'un signal source.

Le codage canal met en oeuvre un code convolutif. Bien que l'aspect codage canal ne se rapporte pas directement à la présente invention, on en décrit brièvement le principe, afin de présenter complètement un exemple de système de radiodiffusion pouvant mettre en oeuvre le procédé de l'invention. Il s'agit bien sûr d'un simple exemple, non limitatif.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

La figure 11 est un schéma synoptique d'une chaîne d'émission et de réception d'un système mettant en oeuvre la technique COFDM.

Ainsi, les données numériques source 121 à transmettre sont soumises à un codage convolutif 22. Le principe général d'un tel code est d'associer à chaque valeur source une valeur codée dépendante de cette valeur source et d'au moins une des valeurs qui la précède. Du fait du lien ainsi créé entre les valeurs codées, il est alors possible, au décodage, de reconstruire la séquence des valeurs source même lorsqu'une valeur codée reçue est fausse, à l'aide d'un décodage à maximum de vraisemblance, tel qu'un décodage de Viterbi à décision douce (c'est-à-dire un décodage délivrant une estimation de la valeur reçue et une pondération représentative de la confiance que l'on peut accorder à cette estimation).

Avantageusement, un code externe du type Reed-Solomon ou CSRS (Cyclotomatically Shortened Reed Solomon (code de Reed Solomon cyclotomatiquement raccourci)) peut être concaténé au code convolutif.

Comme on l'a déjà précisé, le système COFDM repose sur l'utilisation simultanée d'une pluralité de fréquences porteuses émises simultanément. Le nombre N de porteuses peut être quelconque. Il est classiquement de l'ordre de quelques centaines (il pourrait également être de l'ordre de quelques unités). Chacune de ces porteuses est modulée à un faible débit (par rapport au débit nécessaire pour un système monoporteuse correspondant). Cela permet de réduire l'effet de sélectivité du canal.

Le signal global émis est donc un signal large bande (occupant par exemple une bande de quelques Mégahertz).

Cette bande large est un avantage, dans le cas de systèmes conçus pour tirer parti des trajets multiples, tel que le COFDM. En effet, du fait de l'étalement de la réponse du canal de transmission, il est très improbable qu'un évanouissement profond affecte simultanément l'ensemble du signal.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

Dans ce système COFDM, et contrairement aux méthodes classiques de multiplexage en fréquence, les spectres des différentes porteuses se recouvrent mutuellement. Toutefois, le signal complet vérifie certaines conditions d'orthogonalité, permettant la séparation des informations associées aux différentes porteuses, par exemple en utilisant la technique de la transformation de Fourier (ainsi que cela est précisé plus loin). En d'autres termes, la notion d'orthogonalité des fréquences porteuses sous-entend que les spectres des porteuses peuvent se chevaucher, à la condition que, lorsqu'un des spectres présente sa puissance maximale, c'est-à-dire à la fréquence précise de la porteuse correspondant à ce spectre, tous les autres spectres ont une puissance nulle. Le décodage n'est donc pas perturbé si l'on considère cette fréquence précise.

L'interférence intersymbole introduite notamment par les trajets multiples lors de la transmission peut perturber cette orthogonalité. Pour éviter ce problème, on insère un intervalle de garde entre chaque symbole émis. La durée de cet intervalle de garde est choisie supérieure à l'étalement de la réponse impulsionnelle du canal.

Le module de codage 22 délivre des éléments de données codées $C_k$ 23 appartenant à un alphabet de modulation. Le choix de l'alphabet spécifie le type de modulation utilisé. Par exemple, pour une modulation à 4 états de phase (MDP4), l'alphabet utilisé est {1 + i, 1 - i, -1 + i, -1 - i}. De nombreux autres types de modulation peuvent être utilisés, tels que les modulations MDP8, 16QAM ou les modulations par codage en treillis selon la méthode d'Ungerboeck.

Les éléments de données codés 23 sont ensuite soumis à une opération 24 de répartition dans l'espace fréquence-temps, qui consiste à associer à chacune des fréquences porteuses des éléments de données sélectionnés dans la suite des données codées 23 de façon à briser, par brassage, la corrélation des distorsions subies par les échantillons transmis. Par espace temps-fréquence, on entend un ensemble de points répartis selon deux axes perpendiculaires, l'axe du temps et l'axe des fréquences. Selon l'axe des fréquences, on distingue autant de points qu'il y a de fréquences porteuses. Selon l'axe du temps, un point correspond à la durée d'un symbole.

Par exemple, cette répartition assure au minimum que deux données source successives ne soient pas transmises consécutivement et/ou sur une même fréquence porteuse. Plus généralement, l'éloignement dans l'espace temps-fréquence entre deux données codées successives est au minimum tel que l'indépendance statistique entre ces données soit assurée.

Dans la pratique, cette répartition 24 dans l'espace temps-fréquence peut correspondre à un entrelacement en temps $24_A$ consistant par exemple en une application sélective de retards de différentes durées, suivi d'un entrelacement en fréquences $24_B$, consistant en une affectation sélective des éléments de données retardés aux différentes porteuses.

Dans le cas spécifique de l'invention, cet entrelacement n'est pas appliqué systématiquement à toutes les données. Plus précisément :

- les données formant le canal d'informations rapides (FIC) ne sont pas entrelacées en temps ($24_A$), mais sont entrelacées en fréquence ($24_B$) ;
- les autres données (MSC) sont entrelacées en temps ($24_A$) et en fréquence ($24_B$).

Pour ce faire, le module d'entrelacement temporel $24_A$ est sélectivement activé par un module d'activation 219, qui le contrôle de façon que les données MSC soient entrelacées en temps et que les données FIC ne le soient pas.

Chaque fréquence porteuse est ensuite modulée par la séquence d'éléments de données $C_k$ qui lui est destinée. Cette opération de modulation peut être effectuée par l'application d'une transformation de Fourier rapide inverse ($FFT^{-1}$) 26 sur la suite 25 d'éléments de données.

Le module de transformation inverse 26 délivre des symboles élémentaires de modulation 27 correspondant à la modulation simultanée des N fréquences porteuses et destinés chacun à être transmis pendant l'intervalle de temps $T_s = t_s + \Delta$, où $t_s$ est la durée du symbole "utile", sur laquelle portera la démodulation et où $\Delta$ représente la durée de l'intervalle de garde (par exemple : $\Delta = T_s/4$).

Ces symboles 27 sont ensuite émis, de façon classique, à l'aide d'un module d'émission 28, qui effectue notamment la conversion numérique/analogique des symboles 27, puis une transposition du signal analogique correspondant dans le domaine des radiofréquences.

Chaque symbole émis x(t) peut s'écrire:

$$x(t) = \sum_{k=0}^{N-1} Re\ (C_k \cdot e^{2i\pi f_k t}) \qquad pour\ t \in [0,\ T_s]$$

où $f_k = f_0 + k/t_s$
et avec :

N :     nombre de porteuses du multiplex de porteuses orthogonales ;
$f_0$ :     fréquence arbitraire ;
$C_k$ :     élément de l'alphabet de modulation.

Le signal émis dans le canal de transmission 29 (présentant généralement des trajets multiples) est reçu dans un module de réception 210 du récepteur de radiocommunication, également classique.

Si l'intervalle de garde est plus long que la réponse impulsionnelle du canal, et si celui-ci varie lentement par rapport à la durée $T_s$ d'un symbole (invariance du canal pendant la durée d'un symbole), chaque symbole reçu (non affecté par l'interférence intersymbole) peut se mettre sous la forme :

$$y(t) = \sum_{k=0}^{N-1} Re\ (H_k \cdot C_k^{2i\pi f_k t})$$

où $H_k$ représente la réponse du canal 29 à la fréquence $f_k$.

Dans le module de réception 210, le signal reçu est démodulé sur les voies en phase et en quadrature d'un oscillateur local de transposition à la fréquence $f_0 + 1/(2T)$ et échantillonné par un convertisseur analogique/numérique au rythme de 1/T, avec $T = t_s/N$.

Le signal 221 obtenu s'écrit :

$$x(nT) = (-1)^n \cdot \sum_{k=0}^{N-1} C_k \cdot H_k \cdot e^{2i\pi \frac{nk}{N}} \qquad (n = 0 \ \text{à} \ n-1)$$

Ce signal 211 est soumis à une transformation (FFT) 212, symétrique de la transformation inverse 26. Cette transformation 212 délivre les éléments de données 213 suivants :

$$X_k = H_k C_k = \sum_{n=0}^{N-1} (-1)^n x(nT) \cdot e^{-2i\pi \frac{nk}{N}} \ \text{sur l'ensemble} \ [(-1)^n x(nT)]_{n=0 \ \text{à} \ N-1}$$

Ces données 213 sont ensuite corrigées (214) (suppression du terme $H_k$) par démodulation cohérente ou différentielle. Dans le cas d'une démodulation différentielle 214, et si l'on introduit un indice temporel j sur chaque porteuse, $C_{j,k}$ est le produit d'un codage différentiel des données :

$$C_{j,k} = C_{j-1,k} \cdot D_{j,k}$$

où $D_{j,k}$ sont les données brutes. La démodulation consiste à utiliser au rang j un estimateur simplifié du canal déduit du rang j-1 :

$$\tilde{H}_{j,k} = H_{j-1,k}$$

On obtient donc les éléments de données estimés :

$$X_{j,k} \cdot X_{j-1,k}^* = (C_{j,k} \cdot C_{j-1,k}^*) \cdot (H_{j,k} \cdot H_{j-1,k}^*) = D_{j,k} \cdot |H_{j,k}|^2$$

Ces éléments de données 215 sont ensuite soumis à un module de désentrelacement 216, effectuant les opérations inverses du module 24, de façon à reconstituer l'ordre d'origine des symboles, qui sont ensuite dirigés dans un module de décodage 217, effectuant un décodage à maximum de vraisemblance a posteriori, tel qu'un décodage de Viterbi à décision douce. Dans ce module de décodage 217, le facteur multiplicatif $|H^*_{j,k}|$ de l'équation précédente est directement représentatif de la confiance associée à la décision.

Dans le cas de l'invention, le module de désentrelacement 216 effectue un désentrelacement différent, selon qu'il s'agit de données FIC ou de données MSC (symétriquement à l'entrelacement 24). En conséquence, un module 220 d'activation du désentrelacement temporel contrôle ce module de désentrelacement 216, de façon que le désentrelacement temporel ne soit effectué que pour des données ayant subi un entrelacement correspondant.

Dans la pratique, il apparaît toujours du bruit lors de la transmission des signaux. Le signal reçu doit donc alors s'écrire :

$$X_{j,k} = H_{j,k} \cdot C_{j,k} + N_{j,k}$$

où $N_{j,k}$ est un bruit gaussien complexe dont chaque composante possède une variance $\sigma^2_{j,k}$.

Le décodage selon le critère de maximum de vraisemblance a posteriori consiste alors à minimiser l'expression :

$$\sum_j \sum_k \| X_{j,k} - H_{j,k} \cdot C_{j,k} \|^2 / (2.\sigma^2_{j,k})$$

Le module de décodage fournit ainsi, après un éventuel décodage du code concaténé, si un tel code a été mis en oeuvre à l'émission, le signal 218 correspondant au signal source 121.

Un des avantages essentiels du système COFDM est que les récepteurs ne sont pas perturbés par les échos du signal reçus. Au contraire, ils en tirent avantage.

On rappelle en effet que ce système a été conçu notamment pour permettre la réception de signaux numériques dans des mobiles, même, et en particulier, dans des milieux de transmission particulièrement hostiles, tels que les milieux urbains.

Ainsi, le système COFDM fonctionne dans des canaux affectés de trajets multiples, dus à la présence d'obstacles naturels (édifices, arbres, véhicules, ...). De tels canaux peuvent être modélisés par une distribution de Rayleigh ou une distribution de Rice-Nagakami (si un trajet prédomine).

En d'autres termes, les récepteurs doivent comprendre des moyens de reconstitution des données numériques émises, compensant les problèmes dus aux perturbations, et notamment aux échos induits par le canal de transmission.

Dans le cas du système COFDM, ce résultat est atteint notamment grâce à l'entrelacement en temps et en fréquence (diversité en fréquence), à l'utilisation d'un codage convolutif et à la présence d'un intervalle de garde entre deux symboles de données consécutifs.

Dans un tel système de diffusion, l'existence de trajets multiples apparaît être en fait généralement un avantage, les récepteurs prenant en compte et exploitant les contributions correspondant à chacun de ces trajets.

Cette caractéristique avantageuse permet par ailleurs la mise en oeuvre de réseaux de diffusion monofréquences, c'est-à-dire de réseaux comprenant des émetteurs cocanaux, émettant tous sur la même fréquence de modulation, chaque émetteur étant vu comme un écho.

Il convient de bien faire la distinction entre les termes "multiporteuse" et "monofréquence", qui ne s'appliquent pas à la même phase de traitement du signal à émettre.

Le principe des réseaux monofréquences revient à générer des échos actifs (interprétés comme des échos naturels). Ainsi, la portée du réseau de radiocommunication peut être étendue sans limite, sans que les récepteurs aient besoin d'être équipés de moyens spécifiques, par exemple pour changer de fréquence de réception.

**Revendications**

1. Procédé de transmission de données numériques incluant des informations de radiomessagerie, destiné notamment à transmettre des messages de radiomessagerie vers au moins un récepteur de radiomessagerie ($11_i$ ; $31_i$ ; $32_i$) possédant un identifiant qui lui est propre,
   procédé selon lequel lesdites données sont transmises selon une technique d'émission mettant en oeuvre une pluralité (21) de fréquences porteuses orthogonales et comprenant les étapes de :

   - génération d'une série d'éléments de données source représentative d'un signal à transmettre ;
   - modulation simultanée de chacune desdites fréquences porteuses orthogonales par un desdits éléments de données source respectivement, de façon à former des symboles de données ($33_i$, $34_i$) constitués de ladite pluralité (21) de fréquences porteuses modulées ;
   - transmission desdits symboles de données ($33_i$, $34_i$) vers au moins un desdits récepteurs ($11_i$ ; $31_i$ ; $32_i$) ;

   ledit procédé comprenant les étapes de :

   - regroupement desdits symboles de données ($33_i$, $34_i$) en trames (33, 34) de symboles, chacune desdites trames (33, 34) comprenant un nombre prédéterminé (n) de symboles ;
   - division d'au moins certaines desdites trames en au moins deux canaux :

     - au moins un premier canal (41), dit canal d'information rapide, comprenant au moins un symbole de données, les fréquences porteuses desdits symboles étant modulées par des éléments de données non entrelacés en temps ;
     - au moins un second canal (42), dit canal principal, comprenant au moins un symbole de données, les fréquences porteuses desdits symboles étant modulées par des éléments de données préalablement entrelacés en temps ;

     - insertion dans ledit canal d'information rapide (41) d'au moins certaines desdites trames, dites trames numérotées, d'un numéro de trame (46) appartenant à un jeu de numéros de trames prédéfinis, de telle façon que chacun desdits numéros de trame (46) soit inséré dans une trame à des intervalles de temps fixes prédéterminés ;
     - affectation à chacun desdits récepteurs de radiomessagerie ($31_i$, $32_i$) d'au moins un desdits numéros de trame (46) ;

- transmission d'un message de radiomessagerie vers un desdits récepteurs de radiomessagerie ($31_i$; $32_i$), ledit message comprenant d'une part l'identifiant dudit récepteur et d'autre part des informations utiles, au moins ledit identifiant (46, 491) étant transmis dans ledit canal d'information rapide (41) d'une trame portant un numéro affecté audit récepteur.

2. Procédé selon la revendication 1, caractérisé en ce que, dans chacune desdites trames numérotées, le premier symbole (43) dudit canal d'information rapide (41) comprend un indicateur (47,48) de présence d'information de radiomessagerie dans ladite trame.

3. Procédé selon l'une quelconque des revendications 1 et 2, caractérisé en ce que chacune desdites trames débute par une série d'au moins un symbole (S1, S2, S3) de synchronisation temporelle et/ou fréquentielle.

4. Procédé selon la revendication 3, caractérisé en ce que chacune desdites séries d'au moins un symbole de synchronisation temporel et/ou fréquentiel comprend un symbole de vobulation (S3), fournissant une référence de phase pour la démodulation de chaque fréquence porteuse des symboles suivants de ladite trame,
et en ce que le premier symbole (43) dudit canal d'information rapide (41) est modulé différentiellement par rapport auxdites références de phase fournies par ledit symbole de vobulation (S3).

5. Procédé selon la revendication 4, caractérisé en ce que ledit canal d'information rapide (41) suit directement ledit symbole de vobulation (S3).

6. Procédé selon l'une quelconque des revendications 1 à 5, caractérisé en ce que lesdites informations utiles comprises dans un message de radiomessagerie sont codées à l'aide d'un code convolutif systématique.

7. Procédé selon l'une quelconque des revendications 1 à 6, caractérisé en ce que ledit canal d'information rapide (41) comprend au moins un pointeur (492) renvoyant vers des données complémentaires (410) contenues dans au moins un desdits canaux principaux (421) de la trame en cours et/ou dans au moins un canal d'au moins une trame à venir.

8. Procédé selon l'une quelconque des revendications 1 à 7, caractérisé en ce qu'une partie dudit identifiant (46, $49_1$) correspond à au moins un numéro de trame (46) associé audit récepteur, et en ce que la partie complémentaire ($49_1$) dudit identifiant désigne de façon unique ledit récepteur.

9. Procédé selon l'une quelconque des revendications 1 à 8, caractérisé en ce que ledit intervalle de temps fixe prédéterminé entre deux trames portant un même numéro de trame est compris entre 30 secondes et 5 minutes environ.

10. Procédé selon l'une quelconque des revendications 1 à 9, appliqué à un réseau de diffusion cellulaires comprenant au moins deux cellules de zones de diffusion géographique distinctes, caractérisé en ce que chacun desdits récepteurs de radiomessagerie ($11_i$) est associé sélectivement à au moins une desdites cellules, et en ce qu'un message de radiomessagerie destiné à un récepteur de radiomessagerie ($11_i$) donné n'est transmis que dans la ou les cellules associées audit récepteur donné ($11_i$).

**Claims**

1. Method for transmission of digital data, including radio paging information intended in particular for the transmission of radio paging messages to at least one radio paging receiver ($11_i$; $31_i$; $32_i$)) having its own identifier,
according to which method said data are transmitted according to a transmission technique implementing a plurality (21) of orthogonal carrier frequencies and comprising the following steps:

- generation of a series of source data elements representative of a signal to be transmitted;
- simultaneous modulation of each of said orthogonal carrier frequencies by one of said source data elements respectively, so as to form data symbols ($33_i$, $34_i$) made up of the said plurality (21) of modulated carrier frequencies;
- transmission of the said data symbols ($33_i$, $34_i$) to at least one of the said receivers ($11_i$; $31_i$; $32_i$);

said method comprising the following steps:

- regrouping the said data symbols ($33_i$, $34_i$) in symbol frames (33, 34), each of the said frames (33, 34) comprising a predetermined number (n) of symbols;
- division of at least some of the said frames into at least two channels:

  - at least a first channel (41), termed a fast information channel, comprising at least one data symbol, the carrier frequencies of the said symbols being modulated by data elements that are not temporally interleaved;
  - at least a second channel (42), termed a main channel, comprising at least one data symbol, the carrier frequencies of the said symbols being modulated by data elements that have been previously temporally interleaved;

- insertion in said fast information channel (41) of at least some of the said frames, termed numbered frames, of a frame number (46) belonging to a set of predefined frame numbers, such that each of the said frame numbers (46) is inserted in a frame at predetermined fixed time intervals;
- assignment of at least one of the said frame numbers (46) to each of the said radio paging receivers ($31_i$, $32_i$);
- transmission of a radio paging message to one of the said radio paging receivers ($31_i$, $32_i$), the said message comprising, on the one hand, the identifier of the said receiver and, on the other hand, useful information, at least the said identifier (46, 491 (sic)) being transmitted in the said fast information channel (41) of a frame bearing a number assigned to the said receiver.

2. Method according to Claim 1, characterised in that, in each of the said numbered frames, the first symbol (43) of the said fast information channel (41) comprises an indicator (47, 48) of the presence of radio paging information in the said frame.

3. Method according to either of Claims 1 and 2, characterised in that each of the said frames starts with a series of at least one temporal and/or frequency synchronisation symbol (S1, S2, S3).

4. Method according to Claim 3, characterised in that each of the said series of at least one temporal and/or frequency synchronisation symbol comprises a wobble symbol (S3), supplying a phase reference for demodulation of each carrier frequency of the following symbols of the said frame,
and in that the first symbol (43) of the said fast information channel (41) is modulated differently with respect to the said phase references supplied by the said wobble symbol (S3).

5. Method according to Claim 4, characterised in that the said fast information channel (41) immediately follows the said wobble symbol (S3).

6. Method according to any one of Claims 1 to 5, characterised in that the said useful information contained in a radio paging message is encoded with the aid of a systematic convolutional code.

7. Method according to any one of Claims 1 to 6, characterised in that the said fast information channel (41) comprises at least one pointer (492) referring to complementary data (410) contained in at least one of the said main channels (421) of the current frame and/or in at least one channel of at least one frame to come.

8. Method according to any one of Claims 1 to 7, characterised in that one part of the said identifier (46, $49_1$) corresponds to at least one frame number (46) associated with the said receiver, and in that the complementary part ($49_1$) of the said identifier unambiguously identifies the said receiver.

9. Method according to any one of Claims 1 to 8, characterised in that the said predetermined fixed time interval between two frames bearing the same frame number is between 30 seconds and 5 minutes approximately.

10. Method according to any one of Claims I to 9, applied to a cellular broadcasting network comprising at least two cells of geographically distinct broadcasting zones, characterised in that each of the said radio paging receivers ($11_i$) is selectively associated with at least one of the said cells, and in that a radio paging message intended for a given radio paging receiver ($11_i$) is transmitted only in the cell or cells associated with the said given receiver ($11_i$).

## EP 0 565 470 B1

**Patentansprüche**

1.  Sendeverfahren für digitale Daten, die Funkmeldeinformationen enthalten, insbesondere zum Senden von Funkmeldungen an mindestens einen Empfänger für Funkmeldungen ($11_i$, $31_i$, $32_i$), der ein eigenes Identifikationskennzeichen besitzt, wobei bei dem Verfahren die Daten gemäß einer Sendetechnik übertragen werden, die mit einer Vielzahl (21) von orthogonalen Trägerfrequenzen arbeitet und das Verfahren die folgenden Schritte umfaßt:

    -   Erzeugen einer Reihe von Quellendatenelementen, die für das zu sendende Signal repräsentativ sind;
    -   gleichzeitige Modulation einer jeden orthogonalen Trägerfrequenz jeweils durch eines der Quellendatenelemente, um Datensymbole ($33_i$, $34_i$) zu bilden, die aus der Mehrzahl (21) der modulierten Trägerfrequenzen gebildet werden;
    -   Senden der Datensymbole ($33_i$, $34_i$) zu mindestens einem der Empfänger ($11_i$, $31_i$, $32_i$);

    wobei dieses Verfahren die folgenden Schritte umfaßt:

    -   Umgruppieren der Datensymbole ($33_i$, $34_i$)in Symbolraster (33, 34), wobei jedes dieser Raster (33, 34) eine vorgegebene Zahl (n) von Symbolen umfaßt;
    -   Teilen von mindestens einigen dieser Raster in mindestens zwei Kanäle:

        -   mindestens einen ersten, "schneller Informationskanal" genannten Kanal (41), welcher mindestens ein Datensymbol enthält, wobei die Trägerfrequenzen dieser Symbole durch nicht zeitlich verschachtelte Datenelemente moduliert werden;
        -   mindestens einen zweiten, "Hauptkanal" genannten Kanal (42), welcher mindestens ein Datensymbol enthält, wobei die Trägerfrequenzen dieser Symbole durch vorher zeitlich verschachtelte Datenelemente moduliert werden;

    -   Einfügen in den schnellen Informationskanal (41) von mindestens einigen der Raster, die "numerierte Raster" genannt werden, von einer Rasternummer (46), die einem im voraus definierten Satz von Rasternummern gehört, so daß jede dieser Rasternummern (46) nach im voraus festgelegten feststehenden Zeitintervallen in ein Raster eingefügt wird;
    -   Zuordnen von mindestens einer Rasternummer (46) zu jedem der Empfänger für Funkmeldungen ($31_i$, $32_i$);
    -   Senden einer Funkmeldung zu einem der Empfänger ($31_i$, $32_i$), wobei die Meldung einerseits die Identifikation des Empfängers und andererseits nützliche Informationen enthält, wobei mindestens das Identifikationskennzeichen (46, 491) über den schnellen Informationskanal (41) eines Rasters gesendet wird, das eine Nummer trägt, die diesem Empfänger zugeordnet ist.

2.  Verfahren gemäß Anspruch 1,
    dadurch gekennzeichnet, daß in jeder der numerierten Raster das erste Symbol (43) des schnellen Informationskanals (41) einen Indikator (47, 48) für das Vorhandensein von Funkmeldeinformationen im entsprechenden Raster enthält.

3.  Verfahren gemäß einem der Ansprüche 1 oder 2,
    dadurch gekennzeichnet, daß jedes Raster mit einer Reihe von mindestens einem Symbol (S1, S2, S3) für die zeitliche und/oder frequenzmäßige Synchronisierung beginnt.

4.  Verfahren gemäß Anspruch 3,
    dadurch gekennzeichnet, daß jede der Reihen von mindestens einem zeitlichen und/oder frequenzmäßigen Synchronisierungssymbol ein Wobbelsymbol (S3) enthält, das eine Phasenreferenz für das Demodulieren einer jeden Trägerfrequenz der folgenden Symbole dieses Rasters liefert,
    und dadurch, daß das erste Symbol (43) des schnellen Informationskanals (41) differentiell im Verhältnis zu den Phasenreferenzen moduliert wird, welche von dem Wobbelsymbol (S3) geliefert werden.

5.  Verfahren gemäß Anspruch 4,
    dadurch gekennzeichnet, daß der schnelle Informationskanal (41) unmittelbar auf das Wobbelsymbol (S3) folgt.

6.  Verfahren gemäß einem der Ansprüche 1 bis 5,
    dadurch gekennzeichnet, daß die in einer Funkmeldung enthaltenen nützlichen Informationen mit Hilfe eines systematisch faltenden Codes kodiert werden.

21

7. Verfahren gemäß einem der Ansprüche 1 bis 6,
dadurch gekennzeichnet, daß der schnelle Informationskanal (41 ) mindestens einen Zeiger (492) umfaßt, der auf komplementäre Daten (410) hinweist, welche in mindestens einem der Hauptkanäle (421) des laufenden Rasters und/oder in mindestens einem Kanal von mindestens einem der kommenden Raster enthalten sind.

8. Verfahren gemäß einem der Ansprüche 1 bis 7,
dadurch gekennzeichnet, daß ein Teil des Identifikationskennzeichens (46, $49_1$) mindestens einer Rasternummer (46) entspricht, die dem entpsrechenden Empfänger zugeordnet ist, sowie dadurch, daß der komplementäre Teil ($49_1$) dieses Identifikationskennzeichens den Empfänger eindeutig bezeichnet.

9. Verfahren gemäß einem der Ansprüche 1 bis 8,
dadurch gekennzeichnet, daß die Dauer des im voraus festgelegten, feststehenden Zeitintervalls zwischen zwei Rastern mit der gleichen Rasternummer etwa 30 Sekunden bis 5 Minuten beträgt.

10. Verfahren gemäß einem der Ansprüche 1 bis 9, angewandt auf ein Zellensendenetz, das mindestens zwei verschiedene geographische Sendebereichszellen umfaßt,
dadurch gekennzeichnet, daß jeder der Funkmeldeempfänger ($11_i$) selektiv mindestens einer der Zellen zugeordnet ist und dadurch, daß eine Funkmeldung, die einem Empfänger ($11_i$) zugedacht ist, nur in der Zelle oder in den Zellen gesendet wird, die dem gegebenen Empfänger ($11_i$) zugeordnet sind.

Fig. 1

Fig. 2

Fig. 3

Fig. 4

58   53   59   56   511

C.A.N.   MEMOIRE TAMPON   UNITE CENTRALE

57   515

SYNCHRO   TRAITEMENT NUMERIQUE   54

AFFICHEUR

510

TRAITEMENT ANALOGIQUE   513   512   55

52   HORLOGE D'ACTIVATION   51

## Fig. 5

61   612

REVEIL

t-1   t0   t1   t2   t3

INITIALISATION   STOCKAGE (CAN)   DEMOD. (DSP)   TRAITEMENT (UC)

610

VEILLE   VEILLE

62   64   65   66   67   68   69   611

63

## Fig. 6

Fig. 7

Fig. 8

91 → RECHERCHE FREQUENCE

92 → VALIDATION SYNCHRONISATION

94 → ATTENTE REVEIL

96

95 → VERIFICATION SYNCHRONISATION — N

93

MISE EN VEILLE

910

97 — O

99 — N

PRESENCE SERVICE

98

911 — O

DECODAGE

912

913

N — MESSAGE PERSONNEL

916

914

O

AFFICHAGE

915

Fig. 9

Fig. 11

Fig. 10